# EUROPEAN PATENT APPLICATION

(11) **EP 4 343 468 A1**
(43) Date of publication of application: **27.03.2024**
(21) Application number: 22804344.4
(22) Date of filing: 16.03.2022
(51) Int. Cl.: G05B 19/05

(54) **DEVELOPMENT ASSISTANCE DEVICE, CONTROL METHOD FOR DEVELOPMENT ASSISTANCE DEVICE, INFORMATION PROCESSING PROGRAM, AND RECORDING MEDIUM**

(30) Priority: 21.05.2021 JP 2021086280
(71) Applicant: OMRON Corporation, Kyoto 600-8530 (JP)
(72) Inventor: TAMASHIMA, Daisuke, Kyoto-shi, Kyoto 600-8530 (JP); IWAMURA, Shintaro, Kyoto-shi, Kyoto 600-8530 (JP); SHIMIZU, Shunsuke, Kyoto-shi, Kyoto 600-8530 (JP)
(74) Representative: Becker, Eberhard
(86) International application number: PCT/JP2022/011806
(87) International publication number: WO 2022/244425

(57) **Abstract**

The present invention manages a plurality of sections constituting a program in a format that reflects information in a mutual inclusion relationship, e.g. "function and process of a device," regardless of a logical relationship. In accordance with a user operation, a development assistance device (10) assigns, to each of a plurality of sections (SC) constituting a program (PG), a level number (HN) identifying the level to which each section belongs.

## Description

### [Technical Field]

The present invention relates to, for example, a development assistance device that assists a user in creating a program to be executed by a control device.

### [Background Art]

In the related art, a development assistance device for assisting with the development of a control system using an industrial control device such as a programmable logic controller (hereinafter abbreviated as "PLC") is known. For example, Patent Literatures 1 and 2 listed below disclose a development assistance device that enables a user to divide a user program into a plurality of partial programs (hereinafter referred to as "sections") that are units of processing not related to a calling relationship (logical relationship) and manage the user program.

### [Citation List]

### [Patent Literature]

[Patent Literature 1]
   Japanese Patent Laid-Open No. 2004-240592
[Patent Literature 2]
   Japanese Patent Laid-Open No. 2004-240593

### [Summary of Invention]

### [Technical Problem]

However, the related art as described above does not enable a user to manage a plurality of sections constituting a user program in a format that reflects information having a mutual inclusion relationship such as a "process and function of a device" regardless of a logical relationship.

An objective of an aspect of the present invention is to enable a user to manage a plurality of sections constituting a user program in a format that reflects information having a mutual inclusion relationship such as a "process and function of a device" regardless of a logical relationship.

### [Solution to Problem]

In order to solve the above problem, a development assistance device according to an aspect of the present invention is a development assistance device for assisting a user in creating a program to be executed by a control device. The program is divided into a plurality of sections that are units of processing set by the user regardless of a calling relationship, the plurality of sections is respectively and sequentially executed from a top description position to a bottom description position according to description positions in the program, and the development assistance device includes: a reception part configured to receive a user operation for setting a hierarchical relationship among the plurality of sections; and a hierarchy management part configured to assign information for specifying a hierarchy to which each of the plurality of sections belongs, to each of the plurality of sections, according to the hierarchical relationship.

In order to solve the above problem, a control method according to an aspect of the present invention is a control method for a development assistance device for assisting a user in creating a program to be executed by a control device. The program is divided into a plurality of sections that are units of processing set by the user regardless of a calling relationship, and the plurality of sections is respectively and sequentially executed from a top description position to a bottom description position according to description positions in the program, and the control method includes: a reception step of receiving a user operation for setting a hierarchical relationship among the plurality of sections; and a hierarchy management step of assigning information for specifying a hierarchy to which each of the plurality of sections belongs, to each of the plurality of sections, according to the hierarchical relationship.

### [Advantageous Effects of Invention]

According to an aspect of the present invention, there is an effect that a user can manage a plurality of sections constituting a program in a format that reflects information having a mutual inclusion relationship such as a "process and function of a device" regardless of a logical relationship.

### [Brief Description of Drawings]

FIG. 1 is a block diagram illustrating a main configuration of a development assistance device according to Embodiment 1 of the present invention.
FIG. 2 is a diagram illustrating an overall overview of a control system including the development assistance device of FIG. 1.
FIG. 3 is a diagram illustrating an example of a hierarchical relationship set among a plurality of sections by a user.
FIG. 4 is a diagram illustrating a user operation for lowering or raising a hierarchy of the section.
FIG. 5 is a diagram illustrating a configuration example of a section table stored in a storage part by the development assistance device of FIG. 1.
FIG. 6 is a flow diagram of "processing for setting a hierarchical relationship among a plurality of sections" executed by the development assistance device in FIG. 1.
FIG. 7 is a diagram illustrating an example of each of folded display and unfolded display.
FIG. 8 illustrates an example in which a section belonging to a higher hierarchy than a section with an error is highlighted, in addition to the section with an error.
FIG. 9 is a diagram illustrating an example of a user operation for changing a position in units of section groups.
FIG. 10 is a diagram illustrating an example of a user operation for executing copy and paste in units of section groups.
FIG. 11 is a diagram illustrating an image example in which comparison results before and after program update are displayed.

### [Description of Embodiments]

### [Embodiment 1]

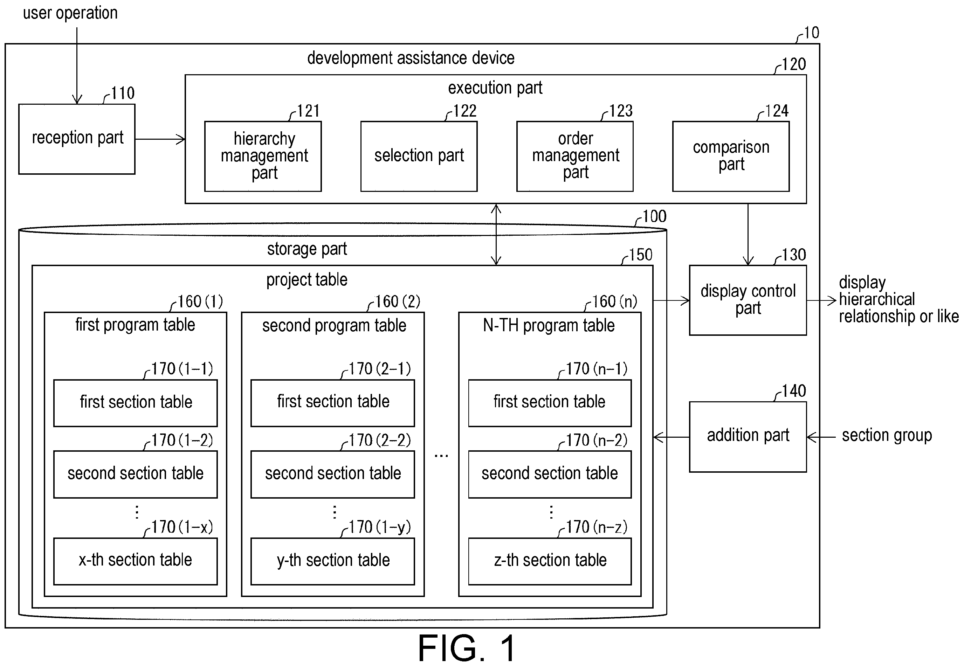

Hereinafter, an embodiment according to an aspect of the present invention (hereinafter also referred to as "the present embodiment") will be described below with reference to FIGS. 1 to 11. The same or corresponding parts in the drawings are denoted by the same reference signs, and description thereof will not be repeated. In the present embodiment, for example, the development assistance device 10 will be described as a typical example of a development assistance device that assists a user in creating a program PG (for example, a user program) executed by a programmable logic controller (PLC) 20 (control device).

In the following description, it is assumed that "m," "n," "p," "q," "x," "y," and "z" each represent an integer equal to or greater than "0." Further, it is assumed that "m" and "n" are integers different from each other, "p" and "q" are integers different from each other, and "x," "y," and "z" are integers different from each other.

Further, when it is necessary to distinguish a plurality of sections SC from each other, a subscript such as "(1)," "(2)," "(3)," ···, "(z)" is added to the reference sign to distinguish the plurality of sections SC. For example, the sections SC are described as "section SC(1)," "section SC(2)," "section SC(3)," ···, "section SC(z)" so that the sections SC are distinguished. When it is not necessary to particularly distinguish the plurality of sections SC, the sections SC are simply referred to as a "section SC." The same applies to a hierarchy number HN, a description position PS, an execution order EO, and the like.

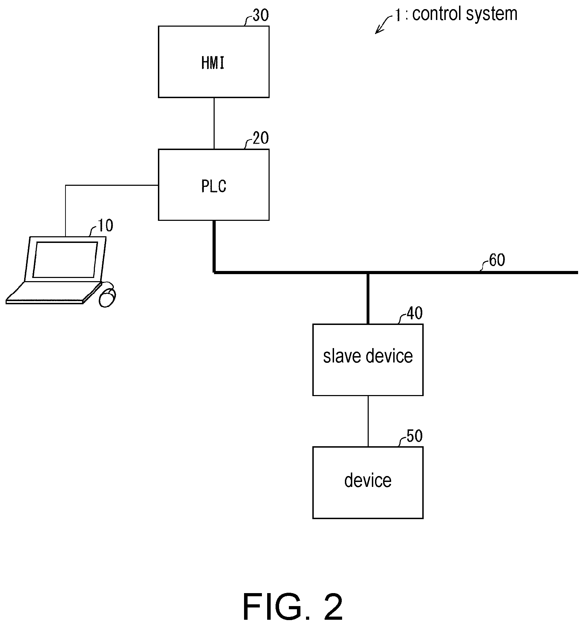

An overview of a control system 1 including the development assistance device 10 will first be described using FIG. 2 in order to facilitate understanding of the development assistance device 10 according to an aspect of the present invention.

### § 1. Application example

### (Overall overview of control system)

FIG. 2 is a diagram illustrating an overall overview of a control system 1 including a development assistance device 10. The control system 1 is a master-slave control system including a PLC 20 as a master device, and one or more slave devices 40 connected to the master device via a network (field network 60). The PLC 20 is referred to as a "master device" in the sense that the PLC 20 manages data transmission via the field network 60.

When a plurality of PLCs 20 is connected to the field network 60, any one of the PLCs 20 may become the master device and the other PLCs 20 may become slave devices. Further, a control subject different from both the PLC 20 and the slave device 40 may be the master device. That is, the "master device" and the "slave device" are defined by focusing on a control function for data transmission on the field network 60, and information transmitted and received between the respective devices is not particularly limited.

The PLC 20 controls the entire control system 1. Specifically, the PLC 20 acquires, as input data, information from a device 50 which is an input device such as a sensor via the slave device 40. The PLC 20 executes the arithmetic processing using the acquired input data according to a previously incorporated user program. The PLC 20 executes the arithmetic processing to determine control content for the device 50 which is an output device such as an actuator, and outputs control data corresponding to the control content to the device 50 via the slave device 40.

The field network 60 transmits various types of data received by the PLC 20 or transmitted by the PLC 20. The field network 60 is, for example, EtherCAT (registered trademark), PROFINET (registered trademark), MECHATROLINK (registered trademark)-III, Powerlink, SERCOS (registered trademark)-III, or CIP Motion. Further, the field network 60 may be, for example, EtherNet/IP (registered trademark), DeviceNet, or CompoNet (registered trademark). Hereinafter, the control system 1 in which data is transmitted or received between the PLC 20 and the slave device 40 or between the plurality of slave devices 40 by data frames being sequentially transferred on the field network 60 will be described.

The slave device 40 is a slave device in a network (the field network 60) with the PLC 20 as a master device, and is a device communication management part such as a communication coupler that manages communication with the device 50, for example. The slave device 40 may be a servo driver that is directly connected to the field network 60.

The device 50 is, for example, an input device such as a sensor, and is an output device such as an actuator. One or more devices 50 are connected to the slave device 40 via communication cables.

The development assistance device 10 is connected to the PLC 20 via a communication cable that is a Universal Serial Bus (USB) cable. The development assistance device 10 is an information processing device for generating a user program executed by the PLC 20, various types of setting information for the control system 1, and the like.

The development assistance device 10 provides, for example, a development environment for the PLC 20, and provides an environment that allows the user to create (create and edit) a program such as a user program according to a control purpose (for example, a target line and process). The user creates a program code of a control program (user program) to be executed by the PLC 20 using a development environment (programming tool) provided by the development assistance device 10. The development assistance device 10 may have a debug function and a simulation function in order to assist the user in creating and editing the control program to be executed by the PLC 20.

Further, the development assistance device 10 may execute, for example, calculation and setting of a timing of acquisition (input refresh) of a state value by the PLC 20 and a timing of update (output refresh) of an output value by the PLC 20. The development assistance device 10 may monitor an operating state of the PLC 20, values of various types of data, and the like.

The development assistance device 10 may be a device that provides an integrated development environment that supports 3D motion simulation, in addition to programming, configuration (configuration setting), debugging, maintenance, and monitoring functions of the PLC 20. Further, the development assistance device 10 may set and adjust various parameters for the slave device 40.

The development assistance device 10 is typically configured of a general-purpose computer. For example, an information processing program executed by the development assistance device 10 may be stored and distributed in a compact disc-read only memory (CD-ROM) (not illustrated). The program stored in this CD-ROM is read by a CD-ROM drive (not illustrated) and stored in a hard disk of the development assistance device 10 or the like. Alternatively, the development assistance device 10 may be configured to download the same program as the program stored in the DVD-ROM from a high-level host computer or the like through a network.

As illustrated in FIG. 2, a human machine interface (HMI) 30 may be connected to the PLC 20 via a communication cable. The HMI 30 is a means for exchanging information between the human and the machine, and is, specifically, a means for allowing the human to operate the machine (give instructions to the machine), and allowing the machine to inform the human of a current state and results. For the HMI 30, examples of means for allowing the human to give instructions to the machine include a switch, a button, a handle, a dial, a pedal, a remote controller, a microphone, a keyboard, and a mouse. Further, for the HMI 30, examples of means for allowing the machine to transfer information related to the current state, results, and the like to the human include a liquid crystal screen, a meter, a lamp, and a speaker.

The HMI 30 includes a display part, an operating part, a communication part that communicates with the PLC 20, and a control part that controls each part. The HMI 30 can change various settings of the control system 1 (for example, the PLC 20) according to a user operation with respect to the operating part. Further, the display part of the HMI 30 displays predetermined information for the control system 1.

Programs created and edited using the development environment provided by the development assistance device 10 by the user include a user program, a motion calculation program, a sequence instruction calculation program, and the like. The "user program" is created according to a control target of the user (for example, a target line and process). The development assistance device 10 generates the user program by compiling, for example, a ladder program (source program) described by a ladder logic (ladder language). The ladder logic is a scheme for describing a logic circuit, and is a programming language that is adopted in many PLCs. The user program is generated in an object program format that can be executed by a microprocessor included in the PLC 20, for example. The "motion calculation program" is a program that is executed according to an instruction from the user program, and calculates an instruction value to be output to a motor driver, such as a servo motor driver or a pulse motor driver, each time the program is executed. The "sequence instruction operation program" is a program that is called when a predetermined sequence instruction used in the user program is executed, and is executed to realize content of the instruction.

### (Overview of development assistance device according to present embodiment)

The development assistance device 10 manages one or more projects, each containing "one or more programs PG". The project includes "setting information of the controller such as the PLC 20" and "one or more programs PG".

The program PG is logic that controls the controller, and includes, for example, an ST program and the ladder program.
The program PG is an object to be edited by the user and is also called source code.
The program PG is divided into, for example, a plurality of sections SC corresponding to "processes and functions of the device".

The section SC is obtained by dividing the program PG in any number, and for example, is associated with information meaningful to the user such as the "processes and functions of the device". The section SC is different from a POU, which will be described below, in that the section SC is "a unit (a unit constituting the program PG) that is set regardless of a calling relationship (logical relationship)."

In the related art, a scheme for dividing a program PG into the plurality of sections SC and managing the sections SC is known, and the plurality of sections SC constituting the program PG is executed sequentially from a top description position PS to a bottom description position PS according to the description position PS in the program PG.

The convenience of the section SC is that "the program PG can be divided into a plurality of units and managed", and "the execution order EO of the section SC can be easily ascertained because the execution order EO is simply determined according to the description position PS". That is, the user can arbitrarily divide the program PG into two or more sections SC in association with the information meaningful to the user such as a "process and function of a device" and can easily ascertain the execution order EO of each of the plurality of sections SC.

Here, although the plurality of "processes and functions of the device" may have a mutual inclusion relationship, it is not possible to manage the plurality of sections SC in a format that reflects information having the mutual inclusion relationship such as a "process and function of a device" with the related art.

However, the user wants to manage the program PG by reflecting, in a program structure, information having a mutual inclusion relationship such as the "processes and functions of the device". That is, the user wants to manage the plurality of SCs constituting the program PG in a format that reflects the information having a mutual inclusion relationship such as a "process and function of a device".

Here, a unit referred to as an POU such as a function block and a function is an element for logically hierarchically structuring the program PG, but is not an element reflecting the information having a mutual inclusion relationship such as a "process and function of a device". The POUs are associated with each other depending on a logical relationship (calling relationship), and the user cannot set a relationship among the plurality of POUs regardless of the calling relationships. Therefore, it is difficult to visually ascertain the inclusion relationship such as "processes and functions" according to the management of the program PG based on the POU.

A purpose of the development assistance device 10 is to enable program management (management of the sections SC) such as order change, duplication, and comparison in units meaningful to users such as the "processes and functions of the device" without losing convenience of the sections SC. That is, the purpose of the development assistance device 10 is to enable "the user to visually ascertain the inclusion relationship such as "processes and functions" when managing the program PG", and to simply keep a rule related to the execution order of the program PG. Further, the purpose of the development assistance device 10 is to enable "the user to perform operations such as "changing of the description position EP (that is, the execution order EO)", "replicating", and "comparing" for the sections SC constituting the program PG in units of the inclusion relationship described above". The development assistance device 10 enables the user to perform operations such as changing, duplicating, and comparing the description position EP in units of "the two or more sections SC associated with each other according to the hierarchical relationship (ancestor-descendant relationship) reflecting the above-described inclusion relationship".

In order to achieve the above-described object, the development assistance device 10 provides each of the plurality of sections SC with hierarchy information reflecting the information having a mutual inclusion relationship such as the "processes and functions of the device", and manages the program PG consisting of the plurality of hierarchical sections SC. That is, the development assistance device 10 provides the hierarchy information (hierarchy number HN) to each of the plurality of sections SC constituting the program PG, so that the plurality of sections SC can be managed in a tree form.

Accordingly, the development assistance device 10 enables "the user to collectively execute change, duplication, or comparison of the execution orders EO of the two or more sections SC in units meaningful to the user", with a determination rule for the execution order EO remaining the same as before. The user can manage the program in an efficient and easy-to-understand manner, that is, can manage the plurality of sections SC constituting the program PG by using the development assistance device 10.

Attention points in the development assistance device 10, processing executed by the development assistance device 10, and the like will be briefly described hereinafter.

### (Execution order)

The hierarchy information (hierarchy number HN) assigned to the section SC by the development assistance device 10 is irrelevant to the execution order OR of the sections SC in the program PG. The execution order OR of the sections SC is determined only by the description positions PS of the sections SC in the program PG, and the sections SC are sequentially executed from the top description position PS to the bottom description position in the program PG.

### (Parent-child relationship)

When the user assigns a hierarchical relationship among the plurality of sections SC constituting the program PG, the development assistance device 10 sets a parent-child relationship between the two or more sections SC according to the hierarchy to which the section SC belongs and the description position PS of the section SC.

Specifically, when the section SC(m) and the section SC(n) constituting program PG satisfy the following three conditions, the development assistance device 10 sets, between both, a parent-child relationship with the section SC(m) as a parent node and the section SC(n) as a child node.

The first condition is that the hierarchy to which the section SC(m) belongs is one level higher than the hierarchy to which the section SC(n) belongs, that is, "the hierarchy number HN(m) of the section SC(m) is one smaller than the hierarchy number HN(n) of the section SC(n)".

The second condition is that "in the program PG, the description position PS(m) of the section SC(m) is higher than the description position PS(n) of the section SC(n)". Since the execution order EO of the sections SC is determined only by the description positions PS of the sections SC, the second condition can be rephrased as follows. That is, this can be rephrased as "the execution order EO(m) of the section SC(m) is earlier than the execution order EO(n) of the section SC(n)".

The third condition is that ""sections SC other than the section SC(m) belonging to the same hierarchy as that to which the section SC(m) belongs are not present" between the description position PS(m) and the description position PS(n)". Since the execution order EO of the sections SC is determined only by the description positions PS of the sections SC, the third condition can be rephrased as follows. That is, this can be rephrased as "the sections SC other than the section SC(m) belonging to the same hierarchy as that to which the section SC(m) belongs is not executed between the execution order EO(m) and the execution order EO(n)". The execution order EO(m) is the execution order EO of the section SC(m), and the execution order EO(n) is the execution order EO of the section SC(n).

The development assistance device 10 executes processing such as displaying, changing of the description position PS, cutting, copying, pasting, importing, and exporting of the two or more sections SC having a parent-child relationship (ancestor-descendant relationship), for example, as follows. That is, the development assistance device 10 executes such processing using the same method as that when a personal computer executes the processing such as displaying, changing of the position, cutting, copying, pasting, importing, and exporting of the two or more sections SC having the hierarchical relationship (parent-child relationship).

### (Display processing executed by development assistance device)

The development assistance device 10 displays a relationship between the two or more sections SC having a parent-child relationship (ancestor-descendant relationship) using a tree structure, and for example, displays names (identification information) of the plurality of sections SC constituting the program PG in a tree form. The development assistance device 10 can switch between a folded display and an unfolded display for a name of the section SC displayed in a tree form, as in a display in a tree form that is generally used when two or more elements having a hierarchical relationship (parent-child relationship) are displayed.

Further, in a case in which there is a parent-child relationship between the section SC(m) and the section SC(n), the development assistance device 10 may display the following information when the development assistance device 10 determines that "an error is present in content (program or source code) of the section SC(n)". That is, the development assistance device 10 displays a name of the section SC(m), in addition to a name of the section SC(n), as a name of the section SC in which the error has been found.

### (Changing of description position and execution order)

As described above, the execution order EO of the sections SC is determined only by the description positions PS of the sections SC in the program PG. The user can change the execution order EO of the sections SC in the program PG by changing the description positions PS of the sections SC in the program PG.

The user can collectively change the description positions PS of the two or more sections SC having the ancestor-descendant relationship (parent-child relationship) by using the development assistance device 10.

In the following description, a set of the two or more sections SC consisting of "one section SC corresponding to an ancestor node" and "all sections SC corresponding to descendant nodes for the ancestor node" is also referred to as a "section group SG". For example, a set of sections SC including the section SC(p), and all sections SC corresponding to descendant nodes with the section SC(p) as an ancestor node may be referred to as a section group SG(p). Similarly, a set of sections SC consisting of the section SC(q) and all sections SC corresponding to descendant nodes with the section SC(q) as an ancestor node may be referred to as a section group SG(q).

For example, when the section SC(p) and the section SC(q) belong to the same hierarchy, the user can collectively change the description position PS of the two or more sections included in the section group SG as follows using the development assistance device 10. That is, the user can replace the description position PS of the section group SG(p) with the description position PS of the section group SG(q).

For example, the user collectively change the description positions PS of the two or more sections SC included in the section group SG(q) to a position higher than the description position PS(p) of the section SC(p). The user can collectively change the description positions PS of the two or more sections SC included in the section group SG(p) to a position below the description position PS of the section SC with the lowest description position PS among the sections SC included in the section group (q).

Moreover, the user can collectively change the description position PS of the two or more sections included in the section group SG in units of the section group SG without changing a relative positional relationship between the two or more sections SC included in the section group SG.

The user can collectively move the description positions of the two or more sections SC, including the section SC corresponding to the descendant node of the section SC(p), in addition to the selected section SC(p), upward or downward from the description position PS of the section group SC(q).

### (Cutting, copying, pasting, and the like)

The user can collectively execute an operation of at least of cutting, copying, pasting, importing, and exporting for the two sections SC having the ancestor-descendant relationship (parent-child relationship) by using the development assistance device 10. In other words, the user can perform the operation such as cutting in units of "section groups SG each consisting of "one section SC and all sections SC corresponding to descendant nodes when the one section SC is set as an ancestor node"".

### (Comparison before and after program update)

When the program PG is updated (changed) by the user, the development assistance device 10 can compare the programs PG before and after update or merge the two programs.

Specifically, the development assistance device 10 can compare the following information between the program PG before update and the program PG after update. That is, the development assistance device 10 independently compares, for the programs PG before and after update, the hierarchy information of each of the plurality of sections SC constituting each program PG with content of each of the plurality of sections SC constituting each program PG.

Further, the development assistance device 10 can merge each of the plurality of sections SC constituting the program PG before update and each of the plurality of sections SC constituting the program PG after update.

### (POU)

As units constituting the program PG, there is a program organization unit (POU) defined in IEC61131-3 separately from the section SC. In IEC61131-3, a program PG is created in units of functions, and this function unit is called a "POU". The POU can be regarded as a "minimum unit for program management consisting of a plurality of instruction words", and is a general term of functional components constituting the user program.

The POU is a logical unit constituting the program PG, and a plurality of POUs are associated to each other according to a logical relationship (calling relationship). A difference between the POUs and the section SC is that the POUs are units associated with each other according to the logical relationship, whereas the sections SC are units arbitrarily associated by the user according to the "processes and functions of the device" or the like regardless of the logical relationship.

The "calling relationship" refers to a "calling-called relationship" among "a plurality of units (elements) constituting the program PG" such as program organization unit (POU) defined in IEC 61131-3. The "calling relationship" may also be referred to as a "referring-referred relationship" or a "logical relationship".

For example, when a certain POU calls (refers to) another POU in the program PG, the certain POU may be referred to as a calling source (a referring source), and the other POU called by the certain POU may be referred to as a calling destination (referring destination). It is said that there is a calling relationship with the certain POU as the calling source and the other POU as the calling destination between the certain POU and the other POU.

Examples of POUs which are logical units constituting the user program include a program PG, a function, and a function block. That is, there are three types of POUs including a program PG, a function, and a function block, and the POU is a general term for these.

The program may be abbreviated as "PRG" or "PG", and refers to an algorithm that uses functions, function blocks, or the like.

The function block may be abbreviated as "FB" and refers to a block of processing that needs to hold internal variables. Many of libraries are the function blocks.

The function may be abbreviated as "FUN" and refers to an instruction without an internal state, which is used for four arithmetic operations, type conversion, or the like.

A difference between the function block and the function is that the function block can generate another instance of the same type, whereas the function cannot generate an instance only with a logic. Further, the function always provides the same operation results when inputs are the same, and this point is different from the function block.

### (Sections before and after hierarchical relationship is set)

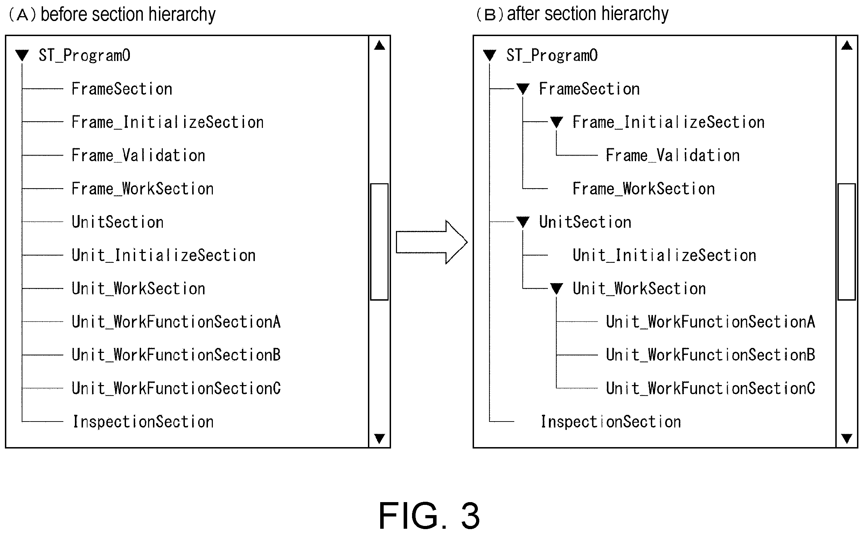

FIG. 3 is a diagram illustrating an example of a hierarchical relationship set among the plurality of sections SC by the user. A left side in FIG. 3 (that is, (A) of FIG. 3) illustrates an image example showing the program PG before a hierarchical relationship is set among the plurality of sections SC. A right side in FIG. 3 (that is, (B) of FIG. 3) illustrates an image example showing the program PG after the hierarchical relationship is set among the plurality of sections SC. The image example illustrated to the left in FIG. 3 and the image example shown on the right side in FIG. 3 are each displayed by the development assistance device 10, for example.

In the image example illustrated to the left in FIG. 3, the program PG (specifically, ST_Program0) is divided into the following 11 sections SC. That is, the program PG: ST_Program0 is divided into the 11 sections SC such as FrameSection, Frame_InitializeSection, ···, InspectionSection in order from top.

In the following description, FrameSection may be expressed as section SC(1), Frame_InitializeSection as section SC(2), and Frame_Validation as section SC(3). Further, Frame_WorkSection may be expressed as section SC(4), UnitSection as section SC(5), ···, InspectionSection as section SC(11).

In the image example illustrated to the left in FIG. 3, no hierarchical relationship is set in the 11 sections SC, in other words, all the hierarchies to which the 11 sections SC belong are the same. For example, the 11 sections SC all belong to the hierarchy with "hierarchy number HN: 1".

In the image example illustrated to the left in FIG. 3, a hierarchical relationship (parent-child relationship) is set in the 11 sections SC illustrated to the left in FIG. 3, unlike the image example illustrated to the right in FIG. 3.

For example, the following hierarchical relationship (parent-child relationship) is set between three sections SC including FrameSection, Frame_InitializeSection, and Frame_WorkSection. That is, a parent-child relationship with FrameSection as a parent node and Frame_InitializeSection and Frame_WorkSection as child nodes is set. A hierarchy to which the section SC(2) called Frame_InitializeSection and the section SC(4) called Frame_WorkSection belong is a hierarchy immediately below the hierarchy to which the section SC(1) called FrameSection belongs.

Further, for example, the following hierarchical relationship (parent-child relationship) is set between Frame_InitializeSection and Frame_Validation. That is, a parent-child relationship with Frame_InitializeSection as a parent node and Frame_Validation as a child node is set. A hierarchy to which the section SC(3) called Frame_Validation belongs is a hierarchy immediately below the hierarchy to which the section SC(2) called Frame_InitializeSection belongs. Frame_Validation can be regarded as a section SC corresponding to a descendant node with FrameSection as a parent node (ancestor node).

Further, for example, the following hierarchical relationship (parent-child relationship) is set between the three sections SC such as UnitSection, Unit_InitializeSection, and Unit_WorkSection. That is, a parent-child relationship with UnitSection as a parent node and Unit_InitializeSection and Unit_WorkSection as child nodes is set. A hierarchy to which the section SC(6) called Unit_Initialize Section and the section SC(7) called Unit_WorkSection belong is a hierarchy immediately below the hierarchy to which the section SC(5) called UnitSection belongs.

Further, the following parent-child relationship between Unit_WorkSection, Unit_WorkFunctionSectionA, Umt_WorkFunctionSectionB, and Unit_WorkFunctionSectionC is set. That is, a parent-child relationship with Unit_WorkSection as a parent node and the three other sections SC as child nodes is set. A hierarchy to which Unit_WorkFunctionSectionA, Unit_WorkFunctionSectionB, and Unit_WorkFunctionSectionC belong is a hierarchy immediately below the hierarchy to which Unit_WorkSection belongs. Unit_WorkFunctionSectionA, Unit_WorkFunctionSectionB, and Unit_WorkFunctionSectionC correspond to descendant nodes with Unit_WorkSection as a parent node (ancestor node).

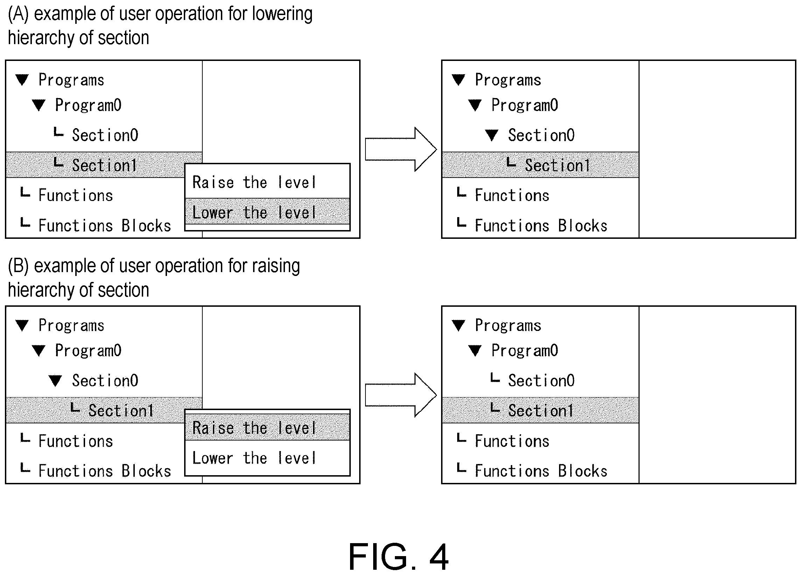

Although details will be described below, when the development assistance device 10 receives a user operation (for example, a user operation illustrated in FIG. 4) for changing the hierarchy to which the section SC belongs, the development assistance device 10 sets a parent-child relationship among the plurality of sections SC constituting the program PG or releases the parent-child relationship. For example, when the development assistance device 10 receives a user operation for setting the hierarchical relationship among the 11 sections SC illustrated to the left in FIG. 3, the development assistance device 10 sets a parent-child relationship (ancestor-descendant relationship) among the 11 sections SC, as illustrated to the right in FIG. 3.

The development assistance device 10 provides the hierarchy information (specifically, the hierarchy number HN) to the sections SC into which the program PG is divided, to thereby hierarchically manage the plurality of sections SC constituting the program PG. Specifically, the development assistance device 10 adds the hierarchy information to the section SC to manage the section SC(m) and the section SC(n), for example, so that the section SC(n) belongs to a hierarchy lower than the hierarchy to which the section SC(m) belongs. In particular, the development assistance device 10 manages a relationship between the sections SC to which the hierarchical relationship has been assigned, as a parent-child relationship (ancestor-descendant relationship).

Hierarchy information (that is, the hierarchy number HN of the section SC) assigned to the section SC by the development assistance device 10 does not have influence on a program execution order, that is, the execution order EO of the section SC is not affected by the hierarchy number HN of the section SC.

Hereinafter, the hierarchy number HN assigned to the section SC, the execution order EO of the section SC, and the parent-child relationship (ancestor-descendant relationship) between the two or more sections SC will be described.

### (Hierarchy number)

The development assistance device 10 manages the hierarchy to which each of the plurality of sections SC constituting the program PG belongs using the hierarchy number HN. For example, the development assistance device 10 sets the hierarchy number HN as follows for each of the above-described 11 sections SC constituting the program PG: ST_Program0 illustrated to the right in FIG. 3.

That is, the development assistance device 10 sets the hierarchy numbers HN of the FrameSection, UnitSection, and InspectionSection belonging to the highest hierarchy among the above-described 11 sections SC illustrated to the right in FIG. 3 to, for example, "1".

Further, the development assistance device 10 sets the hierarchy number HN of the section SC belonging to a hierarchy immediately below a certain hierarchy to a numerical value obtained by adding "1" to the hierarchy number HN of the section SC belonging to the certain hierarchy.
For example, when the section SC belonging to the highest hierarchy is the parent node, the development assistance device 10 sets the hierarchy number HN of the section SC corresponding to the child node to "2" that is obtained by adding "1" to "Hierarchy number HN:0" of the section SC belonging to the highest hierarchy.

In the example on the right side in FIG. 3, the development assistance device 10 sets the hierarchy numbers HN of each of Frame_InitializeSection and Frame _WorkSection corresponding to "child nodes with FrameSection as a parent node" to "2". Similarly, the development assistance device 10 sets the hierarchy numbers HN of each of Unit_InitializeSection and Unit_WorkSection corresponding to "a child node with UnitSection as a parent node" to "2".

Further, the development assistance device 10 sets the hierarchy number HN of Frame_Validation corresponding to "a child node with Frame_InitializeSection as a parent node" to "3". Similarly, the development assistance device 10 sets the hierarchy number HN of each of three sections SC corresponding to the "child node with Unit_WorkSection as the parent node" to "3". That is, the development assistance device 10 sets the hierarchy numbers HN of Unit_WorkFunctionSectionA, Unit_WorkFunctionSectionB, and Unit_WorkFunctionSectionC to "3".

### (Execution order)

The development assistance device 10 manages the execution order EO of each of the plurality of sections SC constituting the program PG according to only the description position PS in the program PG regardless of each hierarchy number HN. Specifically, the development assistance device 10 makes the execution order EO of the section SC with the higher description position PS in the program PG earlier than the execution order EO of the section SC with the lower description position PS in the program PG.

For example, when the description position PS(m) of the section SC(m) in the program PG is higher than the description position PS(n) of the section SC(n), the development assistance device 10 sets the execution order EO(m) of the section SC(m) as follows. That is, the development assistance device 10 makes the execution order EO(m) of the section SC(m) earlier than the execution order EO(n) of the section SC(n).

Therefore, even in a case in which the hierarchical relationship is set among the plurality of sections SC, the development assistance device 10 does not change the execution orders EO of the plurality of sections SC when the description positions PS of the plurality of sections SC is not vertically changed.

For example, there is a difference between the left side and the right side in FIG. 3 in that the hierarchical relationship is not set/the hierarchical relationship is set for the above-described 11 sections SC. However, on the left side and the right side in FIG. 3, the "description position PS in program PG: ST_Program0" of each of the above-described 11 sections SC is not vertically changed.

That is, on both the left and right sides in FIG. 3, a description position PS(1) of FrameSection is immediately higher than a description position PS(2) of Frame_InitializeSection. Further, on both the left side and the right side in FIG. 3, the description position PS(2) of Frame_InitializeSection is immediately higher than a description position PS(3) of Frame_Validation. Similarly, on both the left and right sides in FIG. 3, the description position PS(3) of Frame _Validation is immediately higher than a description position PS(4) of Frame _WorkSection. ···, a description position PS(11) of InspectionSection is at the bottom.

Therefore, the development assistance device 10 does not change the execution order EO of each of the above-described 11 sections SC on the left side and the right side in FIG. 3. When, when there is a user operation for "changing the hierarchy to which the section SC belongs without vertically changing the description position PS of the section SC", the development assistance device 10 does not change the execution order EO of the section SC, and changes only the hierarchy number HN of section SC. Further, when there is a user operation for "vertically changing the description position PS of the section SC without changing the hierarchy to which the section SC belongs", the development assistance device 10 does not change the hierarchy number HN of the section SC, and changes only the execution order EO of section SC.

On both the left and right sides of FIG. 3, the section SC to be first executed is FrameSection, the section SC to be second executed is Frame_InitializeSection, the section SC to be third executed is Frame_Validation, and the section SC to be last executed is InspectionSection. That is, on both the left and right sides of FIG. 3, the 11 sections SC are executed sequentially as FrameSection, Frame_InitializeSection, and Frame_Validation, and InspectionSection is last executed.

### (Parent-child relationship)

When the hierarchical relationship is set among the plurality of sections SC constituting the program PG by the user, the development assistance device 10 sets a parent-child relationship (ancestor-descendant relationship) among the plurality of sections SC using the hierarchical relationship. That is, when the section SC(m) and the section SC(n) satisfy all of the first condition, second condition, and third condition described above, the development assistance device 10 sets the parent-child relationship with the section SC(m) as a parent node and the section SC(n) as a child node.

In the image example on the right side in FIG. 3, FrameSection and "each of Frame_InitializeSection and Frame_WorkSection" satisfy all of the first, second, and third conditions described above. Therefore, the development assistance device 10 sets a parent-child relationship with FrameSection as a parent node and Frame _InitializeSection and Frame _WorkSection as child nodes between the three sections SC.

Further, Frame _InitializeSection and Frame_Validation satisfy all of the first, second, and third conditions described above. Therefore, the development assistance device 10 sets a parent-child relationship with Frame_InitializeSection as a parent node and Frame_Validation as a child node between the two sections SC.

In other words, the development assistance device 10 sets an ancestor-descendant relationship with FrameSection as a parent (ancestor) node and Frame_Validation as a descendant node between FrameSection and Frame_Validation.

Further, the development assistance device 10 confirms that UnitSection and "each of Unit_InitializeSection and Unit_WorkSection" satisfy all of the above-described three conditions, and sets the following parent-child relationship between the three sections. That is, the development assistance device 10 sets a parent-child relationship with UnitSection as a parent node and Unit_InitializeSection and Unit_WorkSection as child nodes.

Similarly, the development assistance device 10 sets a parent-child relationship with Unit_WorkSection as a parent node and the following three sections SC as child nodes. That is, the development assistance device 10 sets a parent-child relationship with each of Unit_WorkFunctionSectionA, Unit_WorkFunctionSectionB, and Unit_WorkFunctionSectionC as a child node.

In other words, the development assistance device 10 sets an ancestor-descendant relationship with UnitSection as a parent (ancestor) node and each of the above-described three sections SC as a descendant node.

### (Example of user operation for setting hierarchical relationship)

FIG. 4 is a diagram illustrating a user operation for lowering or raising the hierarchy of the section SC. In an upper part of FIG. 4 (that is, (A) of FIG. 4), image examples before and after a user operation for lowering, by one level, the hierarchy to which the section SC belongs is received are illustrated. In a lower part of FIG. 4 (that is, (B) of FIG. 4), image examples before and after a user operation for raising, by one level, the hierarchy to which the section SC belongs is received are illustrated. The image example illustrated in the upper part of FIG. 4 and the image example illustrated in the lower part of FIG. 4 are each displayed by the development assistance device 10, for example.

### (Example of user operation for lowering hierarchy by one level)

In (A) of FIG. 4, in the image example illustrated to the left, "section SC(1): Section0" and "section SC(2): Section1" belong to the same hierarchy. In this situation, for "section SC(2): Section1", when "Lower the level" which is a user operation for "lowering, by one level, the hierarchy to which the section SC(2): Section1 belongs" is received, the development assistance device 10 displays an image example illustrated to the right of (A) in FIG. 4.

That is, according to a user operation for lowering, by one level, the hierarchy to which Section1 belongs, the hierarchy of Section1 is one level lower than the hierarchy to which Section1 belongs in the image example illustrated to the left in (A) of FIG. 4 (the same hierarchy as that to which Section0 belongs).

The hierarchy of Section1 is one level below the hierarchy of Section0, which means that Section0 and Section1 satisfy all of the first condition, second condition, and third condition described above.

Therefore, the development assistance device 10 sets a parent-child relationship with Section0 as a parent node and Section1 as a child node between Section0 and Section1, and expresses a relationship between both the sections using a tree structure, as illustrated to the right in (A) of FIG. 4.

That is, when the development assistance device 10 receives a user operation for "lowering, by one level, the hierarchy to which Section1 belongs" for Section1, the development assistance device 10 increases the hierarchy number HN of Section1 by one without changing the execution order EO of Section1 .

The development assistance device 10 sets Section 1 described at the description position PS immediately below the description position PS of Section0 as the section SC corresponding to "a child node with Section0 as a parent node". As shown in the image example illustrated to the right in (A) of FIG. 4, the development assistance device 10 displays the parent-child relationship (hierarchical relationship) between both using a tree structure with Section0 as a parent node and Section 1 as a child node.

When there is a user operation for lowering, by one level, the hierarchy to which the section SC having the lower description position PS belongs among two sections SC that "belong to the same hierarchy and have consecutive description positions PS", the development assistance device 10 sets the following parent-child relationship between the two sections SC. That is, the development assistance device 10 sets a parent-child relationship shown in a tree structure with the section SC having the higher description position PS between the two sections SC having the vertically consecutive description positions PS as a parent node and the section SC having the lower description position PS as a child node.

For example, when the description position PS(m) of the section SC(m) is immediately higher than the description position PS(n) of the section SC(n), and the hierarchy number HN(m) of the section SC(m) is one greater than the hierarchy number HN(n) of the section SC(n), the development assistance device 10 executes the following processing. That is, the development assistance device 10 confirms that the section SC(m) and the section SC(n) satisfy all of the first, second, and third conditions described above. The development assistance device 10 sets the parent-child relationship (hierarchical relationship) with the section SC(m) as a parent node and the section SC(n) as a child node between the section SC(m) and the section SC(n).

The development assistance device 10 defines a relationship between the section SC(m) and the section SC(n) according to, for example, a tree structure in which the section SC(m) is a parent node and the section SC(n) is a child node.

Here, since the execution order EO of the sections SC is determined only by the description positions PS of the sections SC, the above-described processing executed by the development assistance device 10 can be rephrased as follows. That is, when the execution order EO(m) of the section SC(m) is immediately after the execution order EO(n) of the section SC(n), and the hierarchy number HN(m) is one level higher than the hierarchy number HN(n), the development assistance device 10 sets the section SC(m) and the section SC(n) as a parent and a child.

### (Example of user operation for raising hierarchy by one level)

In (B) of FIG. 4, in the image example illustrated to the left, a parent-child relationship is set between "section SC(1): Section0" and "section SC(2): Section1". That is, the parent-child relationship (hierarchical relationship) between both is displayed according to a tree structure with Section0 as a parent node and Section 1 as a child node. In this situation, when the development assistance device 10 receives "Raise the level" which is a user operation for "raising, by one level, the hierarchy to which section SC (2): Section 1 belongs" for the "section SC (2): Section 1", the development assistance device 10 displays an image example illustrated to the right in (B) of FIG. 4.

That is, the hierarchy of Section 1 is one level higher than the hierarchy to which Section 1 belongs (a hierarchy one level lower than the hierarchy of Section0) in the image example illustrated to the left in (B) of FIG. 4 according to the user operation for raising, by one level, the hierarchy to which Section 1 belongs. That is, the hierarchy to which Section1 belongs is the same as the hierarchy to which Section0 belongs.

When the hierarchy to which Section1 belongs and the hierarchy to which Section0 belongs become the same, a relationship between Section0 and Section1 does not satisfy the first condition described above.

Therefore, the development assistance device 10 eliminates the parent-child relationship (ancestor-descendant relationship) having Section0 as a parent node and Section1 as a child node, as illustrated to the right in (B) of FIG. 4.

That is, when the development assistance device 10 receives a user operation for "raising, by one level, the hierarchy to which Section1 belongs" for Section1, the development assistance device 10 decreases the hierarchy number HN of Section1 by one without changing the execution order EO of Section1 .

The development assistance device 10 sets Section1 described at the description position PS immediately below the description position PS of Section0 as the section SC belonging to the same hierarchy as that to which Section0 belongs. As shown in the image example illustrated to the right in (B) of FIG. 4, the development assistance device 10 displays Section0 and Section1 as two sections SC belonging to the same hierarchy.

When the development assistance device 10 receives a user operation for raising, by one level, the hierarchy to which two sections SC having a parent-child relationship, which are sections SC corresponding to the child node, belongs, the development assistance device 10 eliminates the parent-child relationship between the two sections SC.

For example, when the first condition is not satisfied for the section SC(m) and the section SC(n) having the parent-child relationship with the section SC(m) as a parent node and the section SC(n) as a child node, the development assistance device 10 eliminates the parent-child relationship between both. That is, the development assistance device 10 eliminates the parent-child relationship between the section SC(m) and the section SC(n) when the first condition that "the hierarchy number HN(m) of the section SC(m) is one smaller than the hierarchy number HN(n) of the section SC(n)" is not satisfied.

The development assistance device 10 executes the following processing when the description position PS(m) of the section SC(m) is immediately higher than the description position PS(n) of the section SC(n) and the hierarchy number HN(m) of the section SC(m) is the same as the hierarchy number HN(n) of the section SC(n). That is, the development assistance device 10 treats both the section SC(m) and the section SC(n) as those belonging to the same hierarchy. For example, the development assistance device 10 displays the section SC(m) and the section SC(n) as the two sections SC belonging to the same hierarchy.

Here, since the execution order EO of the sections SC is determined only by the description positions PS of the sections SC, the above-described processing executed by the development assistance device 10 can be rephrased as follows. That is, when the execution order EO(m) is immediately after the execution order EO(n) and the hierarchy number HN(m) is the same as the hierarchy number HN(n), the development assistance device 10 displays the section SC(m) and the section SC(n) as the two sections SC belonging to the same hierarchy.

### (User operation to collectively raise/lower hierarchies of plurality of sections by one level)

So far, an example in which the user raises or lowers, by one level, the hierarchy to which a certain section SC belongs, for the certain section SC, has been described. Further, the user can collectively raise or lower, by one level, the hierarchy to which the plurality of sections SC belongs, for the plurality of sections SC.

For example, it is assumed that the program PG consists of three sections SC including "section SC(0): Section0", "section SC(1): Section1", and "section SC(2): Section2". It is assumed that, in the program PG, the execution orders of the three sections are that the section SC(0) is first, the section SC(1) is second, and the section SC(2) is third. Further, it is assumed that both the section SC(0) and the section SC(1) belong to the highest hierarchy, that is, hierarchy numbers HN of both are "1 ", and the section SC(2) belongs to the second higher hierarchy from the top, that is, the hierarchy number HN is "2".

In this case, the section SC(1) and the section SC(2) satisfy all of the first, second, and third conditions described above. Therefore, the development assistance device 10 sets a parent-child relationship with the section SC(1) as a parent node and the section SC(2) as a child node between the section SC(1) and the section SC(2).

In the above-described state, when the user selects "Lower the level", which is a user operation for "lowering the hierarchy to which the section SC(1) belongs" for the section SC(1), the development assistance device 10 executes the following processing. That is, the development assistance device 10 lowers, by one level, the hierarchy to which the section SC(1) belongs, and also lowers, by one level, the hierarchy to which the section SC(2) belongs. In other words, the development assistance device 10 changes the hierarchy number HN of the section SC(1) from "1" to "2", and changes the hierarchy number HN of the section SC(2) from "2" to "3". As a result, the section SC(0) belongs to the highest hierarchy, the section SC(1) belongs to the second highest hierarchy from top, and the section SC(2) belongs to the third highest hierarchy from top.

The section SC(0) and the section SC(1) satisfy all of the first, second, and third conditions described above. Therefore, the development assistance device 10 sets a parent-child relationship with the section SC(0) as a parent node and the section SC(1) as a child node between the section SC(0) and the section SC(1).

Further, the section SC(1) and the section SC(2) satisfy all of the first, second, and third conditions described above. Therefore, the development assistance device 10 sets the parent-child relationship with the section SC(1) as the parent node and the section SC(2) as the child node between the section SC(1) and the section SC(2).

Further, when the user selects "Raise the level" which is a user operation for "raising the hierarchy to which the section SC(1) belongs" for the section SC(1) from such a state, the development assistance device 10 executes the following processing. That is, the development assistance device 10 raises, by one level, the hierarchy to which the section SC(1) belongs, and also raises, by one level, the hierarchy to which the section SC(2) belongs. In other words, the development assistance device 10 changes the hierarchy number HN of the section SC(1) from "2" to "1", and changes the hierarchy number HN of the section SC(2) from "3" to "2". As a result, both the section SC(0) and the section SC(1) belong to the highest hierarchy, and the section SC(2) belongs to the second highest hierarchy from top.

Since the hierarchy to which the section SC(0) belongs and the hierarchy to which the section SC(1) belongs become the same, a relationship between the section SC(0) and the section SC(1) no longer satisfies the first condition described above. Therefore, the development assistance device 10 eliminates the "parent-child relationship with the section SC(0) as the parent node and the section SC(1) as the child node" between the section SC(0) and the section SC(1).

Further, the section SC(1) and the section SC(2) satisfy all of the first, second, and third conditions described above. Therefore, the development assistance device 10 maintains the parent-child relationship with the section SC(1) as a parent node and the section SC(2) as a child node between the section SC(1) and the section SC(2).

As described above, in a case in which there is the ancestor-descendant relationship between the two or more sections SC, the development assistance device 10 executes the following processing when there is a user operation for raising or lowering, by one level, the hierarchy to which the section SC corresponding to the ancestor node (parent node) belongs.

That is, the development assistance device 10 raises or lowers, by one level, the hierarchy to which the section SC corresponding to the ancestor node (parent node) belongs according to the received user operation. Further, the development assistance device 10 raises or lowers, by one level, the hierarchy to which each of the sections SC corresponding to descendant nodes (child nodes) belongs according to the received user operation. In other words, the development assistance device 10 decreases or increases the hierarchy number HN of each of the section SC corresponding to the ancestor node and the section SC corresponding to the descendant node by one.

Therefore, the user can collectively raise or lower, by one level, the hierarchy to which each of the two or more sections SC in which the ancestor-descendant relationship has been set belongs by using the development assistance device 10.

As described above, the development assistance device 10 executes the following processing when a user operation for raising or lowering, by one level, the hierarchy to which the certain section SC belongs is received. That is, the development assistance device 10 (in particular, a hierarchy management part 121 to be described below) raises or lowers, by one level, the hierarchy to which the certain section SC belongs according to the user operation. Further, the development assistance device 10 collectively raises or lowers, by one level, the hierarchy to which all the sections SC corresponding to the descendant nodes in the tree structure with the certain section SC as an ancestor node belong, according to the user operation.

According to the above configuration, when a user operation for raising or lowering, by one level, the hierarchy to which the certain section SC corresponding to the ancestor node belongs is received, the development assistance device 10 changes the hierarchy to which the following section SC belongs, in addition to the hierarchy to which the certain section SC belongs. That is, the development assistance device 10 changes the hierarchy to which all the sections SC corresponding to the descendant nodes in the tree structure with the certain section SC as the ancestor node belong, in addition to the hierarchy to which the certain section belongs.

Therefore, the development assistance device 10 has an effect that it is possible to collectively raise or lower, by one level, the hierarchy to which each of the two or more sections SC having the ancestor-descendant relationship belongs according to the user operation.

### (Example of user operations other than selection on menu screen)

In the example illustrated in FIG. 4, an example in which the development assistance device 10 receives the user operation "lower the hierarchy by one level" or the user operation "raise the hierarchy by one level" selected on a menu screen has been described. However, it is not essential for the development assistance device 10 to receive the user operation "lower the hierarchy by one level" or the user operation "raise the hierarchy by one level" selected on the menu screen. For example, the development assistance device 10 may receive the user operation "lower the hierarchy by one level" or "raise the hierarchy by one level" of the selected section SC by dragging and dropping the selected section SC.

The overview of the development assistance device 10 described above with reference to FIGS. 2, 3, and 4 is as follows. That is, the development assistance device 10 is a development assistance device that assists the user in creating the program PG to be executed by the PLC 20 (control device). The program PG is divided into the plurality of sections SC that are units of processing set by the user regardless of a calling relationship (logical relationship). The plurality of sections SC is sequentially executed from the top description position PS to the bottom description position PS according to the description position PS in the program PG.

The development assistance device 10 includes a reception part 110 and the hierarchy management part 121, which will be described below with reference to FIG. 1. The reception part 110 receives a user operation for setting a hierarchical relationship among the plurality of sections SC. The hierarchy management part 121 assigns a hierarchy number HN, which is information for specifying the hierarchy to which each of the plurality of sections SC belongs, to each of the plurality of sections SC according to the hierarchical relationship set by the user operation received by the reception part 110.

According to the above configuration, when the development assistance device 10 receives the user operation for setting a hierarchical relationship among the plurality of sections SC, the development assistance device 10 assigns the hierarchy number HN for specifying the hierarchy to which each of the plurality of sections SC belongs to each of the plurality of sections SC according to the hierarchical relationship set by the user.

The "calling relationship" refers to a "calling-called relationship" among "a plurality of units (elements) constituting the program PG" such as program organization unit (POU) defined in IEC 61131-3. The "calling relationship" may also be referred to as a "referring-referred relationship" or a "logical relationship".

For example, when a certain POU calls (refers to) another POU in the program PG, the certain POU may be referred to as a calling source (a referring source), and the other POU called by the certain POU may be referred to as a calling destination (referring destination). It is said that there is a calling relationship with the certain POU as the calling source and the other POU as the calling destination between the certain POU and the other POU.

In the related art, it is not possible to set the hierarchical relationship among the plurality of sections SC constituting the program PG, and thus, it is not possible for the user to manage the plurality of sections SC in a format that reflects information having a mutual inclusion relationship such as a "process and function of a device".

On the other hand, the development assistance device 10 enables the user to set an "any hierarchical relationship" among the plurality of sections SC constituting the program PG regardless of the calling relationship (logical relationship). That is, the user can set a hierarchical relationship that reflects the information having a mutual inclusion relationship such as a "process and function of a device" among the plurality of sections SC constituting the program PG.

Therefore, the development assistance device 10 has an effect that the user is enabled to "manage the plurality of sections SC constituting the program PG in a format that reflects information having a mutual inclusion relationship such as a "process and function of a device" regardless of a logical relationship".

Further, since the execution order EO of the sections SC is determined according to a simple rule of "sequential execution from the top description position PS to the bottom description position PS", the user can easily understand the execution order EO of each of the plurality of sections SC. The fact that "the user can easily understand the execution order EO of each of the plurality of sections SC" can be evaluated as the convenience of the sections SC.

The hierarchy number HN assigned to each of the plurality of sections SC constituting the program PG does not have influence on the execution order EO of each of the plurality of sections SC, that is, the hierarchy to which the section SC belongs does not have influence on the execution order EO of the section SC. Therefore, even when the hierarchical relationship is set among the plurality of sections SC by the user, there is no influence on the simple rule for the sections SC of "sequential execution from the top description position PS to the bottom description position PS", that is, there is no influence on the convenience of the section SC.

Therefore, the development assistance device 10 has an effect that the user is enabled to "manage the plurality of sections SC in a format that reflects information having a mutual inclusion relationship such as a "process and function of a device"" while maintaining the convenience of the section SC.

Further, the user can set a hierarchical relationship that reflects the information having a mutual inclusion relationship such as a "process and function of a device" among the plurality of sections SC. That is, the user can associate the two or more sections SC with each other according to the "relationship that is meaningful to the user".

The development assistance device 10 executes, for example, at least one of change, duplication, comparison, and the like of the description position PS in the program PG in units of the two or more associated sections SC according to the "relationship meaningful to the user".

Therefore, the development assistance device 10 has an effect that it is possible to execute the change, duplication, comparison, and the like of the description position PS in the program PG in units of the two or more associated sections SC according to the "relationship meaningful to the user".

When the section SC(m) and the section SC(n) satisfy the following three conditions, the development assistance device 10 sets, between both, the parent-child relationship with the section SC(m) as a parent node and the section SC(n) as a child node.

The first condition is that the hierarchy to which the section SC(m) belongs is one level higher than the hierarchy to which the section SC(n) belongs. The second condition is that the description position PS(m) of the section SC(m) is higher than the description position PS(n) of the section SC(n) in the program PG. The third condition is that the sections SC other than the section SC(m) belonging to the same hierarchy as that to which the section SC(m) belongs are not described between the description position PS(m) of the section SC(m) and the description position PS(n) of the section SC(n).

According to the above configuration, the development assistance device 10 sets the parent-child relationship described above between the section SC(m) and the section SC(n) when the section SC(m) and the section SC(n) satisfy the three conditions described above.

Here, the above-described three conditions are conditions related to the hierarchy to which the section SC belongs and the description position PS of the section SC in the program PG. Therefore, the development assistance device 10 can set the parent-child relationship between the section SC(m) and the section SC(n) according to the hierarchical relationship set among the plurality of sections SC by the user and the description position PS of the section SC in the program PG.

The hierarchical relationship is a relationship set arbitrarily by the user, and is, for example, a relationship that reflects information having a mutual inclusion relationship such as a "process and function of a device".

Therefore, the development assistance device 10 has an effect that it is possible to set the above-described parent-child relationship between the section SC(m) and the section SC(n) in a format that reflects information having a mutual inclusion relationship such as a "process and function of a device".

### §2. Configuration example

Next, details of the configuration of the development assistance device 10 of which the overview has been described above will be described with reference to FIG. 1.

### (Detailed configuration of development assistance device)

FIG. 1 is a block diagram illustrating a main configuration of the development assistance device 10. As illustrated in FIG. 1, the development assistance device 10 includes a storage part 100, the reception part 110, an execution part 120, a display control part 130, and an addition part 140 as functional blocks.

The development assistance device 10 may further include an input device and an output device (not illustrated), in addition to the functional blocks illustrated in FIG. 1, and the input device is, for example, a keyboard and a mouse, and the output device is, for example, a display.

Further, the development assistance device 10 may include a programming assistance part (not illustrated) that provides an environment in which the user performs programming the user program as a control program that the PLC 20 is caused to execute according to a control purpose, in addition to the functional blocks described above. However, in order to ensure the simplicity of the description, configurations not directly related to the present embodiment are omitted from the description and block diagrams. However, the development assistance device 10 may include the omitted configuration according to an actual situation of implementation.

The reception part 110, the execution part 120, the display control part 130, and the addition part 140 can be realized, for example, by a central processing unit (CPU) or the like reading a program stored in a storage device (storage part 100) realized by a read only memory (ROM), a non-volatile random access memory (NVRAM), or the like into a random access memory (RAM) (not illustrated) or the like and executing the program. First, details of each of the reception part 110, the execution part 120, the display control part 130, and the addition part 140 will be described hereinafter.

### (Details of functional blocks other than storage part)

The reception part 110 receives a user operation and notifies the execution part 120 of content of the received user operation. When the reception part 110 receives a user operation for instructing import of the section group SG, the reception part 110 may notify the addition part 140 of the content of the user operation.

The execution part 120 is a functional block that executes processing corresponding to user operation received by the reception part 110. The execution part 120 illustrated in FIG. 1 includes a hierarchy management part 121, a selection part 122, an order management part 123, and a comparison part 124.

The hierarchy management part 121 assigns the hierarchy number HN according to the hierarchy to which each of the sections SC belongs to each of the plurality of sections SC constituting the program PG. For example, when there is a user operation for raising, by one level, the hierarchy to which the section SC(m) belongs, the hierarchy management part 121 decreases the value of the hierarchy number HN of the section SC(m) by one. For example, when there is a user operation for lowering, by one level, the hierarchy to which the section SC(m) belongs, the hierarchy management part 121 increases the value of the hierarchy number HN of the section SC(m) by one.

When there is a user operation for selecting the section SC, the selection part 122 selects, as a target, a section group SG consisting of the selected section SC and all sections SC corresponding to descendant nodes in a tree structure with the selected section SC as an ancestor node. For example, when there is a user operation for selecting the section SC(m), the selection part 122 selects, as a target, a section group SG(m) consisting of the section SC(m) and all sections SC corresponding to descendant nodes of the section SC(m).

The order management part 123 sets the execution order EO of each of the sections SC constituting the program PG to a value according to the description position PS of the section SC (the description position PS of the section SC in the program PG). The order management part 123 sets the execution order EO(m) of the section SC(m) with the higher description position PS(m) as the execution order EO earlier than the execution order EO(n) of the section SC(n) with the lower description position PS(n) according to the description positions PS of the sections SC.

Further, when the addition part 140 stores the two or more sections SC having a set ancestor-descendant relationship, that is, the section group SG, in the section table 170, the order management part 123 executes the following processing. That is, the order management part 123 sets the execution order OP of each of the two or more sections SC added to the section table 170 by the addition part 140 while maintaining the ancestor-descendant relationship between the sections.

In particular, the order management part 123 sets the execution order EO of each of the two or more sections SC constituting the imported section group SG without changing each "relative execution order EO'" in the section group. That is, the order management part 123 sets the execution order EO of each of the two or more sections SC constituting the section group SG so that a relative order relationship (relative positional relationship) of the sections SC is not changed.

For example, it is assumed that, in the program table 160 at a time point before the import of the section group SG(m) is executed, "x" is stored in the execution order OP of the section table 170 that has stored the section SC with the latest execution order EO. It is assumed that, in the section group SG(m) consisting of the section SC(m), section SC(m+1), section SC(m+2), ···, section SC(m+n), the execution order OR of these sections SC is in this order. In this case, when the addition part 140 adds "two or more section tables 170 storing each of the two or more sections SC constituting the section group SG(m)" to the program table 160, the order management part 123 executes the following processing.

That is, the order management part 123 stores "x+1" in the execution order OP of the section table 170(m) storing the section SC(m). Further, the order management part 123 stores "x+2" in an execution order OP of a section table 170(m+1) storing the section SC(m+1), and stores "x+3" in an execution order OP of a section table 170(m+2) storing the section SC(m+2). Similarly, the order management part 123 stores "x+n+1" in an execution order OP of a section table 170(m+n) storing the section SC(m+n).

When there is a user operation for comparing the program PG before update with the program PG after update, the comparison part 124 compares the sections SC with the corresponding orders (execution order EO) of both the programs PG, that is, compares the sections SC with the same description position PS in both the programs PG.

Specifically, the comparison part 124 compares the section SC(x) with the x-th description position PS from the top in the program PG before update with the section SC(x) with the x-th description position PS from the top in the program PG after update. Further, the comparison part 124 compares the section SC(y) with the y-th description position PS from the top in the program PG before update with the section SC(y) with the y-th description position PS from the top in the program PG after update. Similarly, the comparison part 124 compares the section SC(z) with the z-th description position PS from the top in the program PG before update with the section SC(z) with the z-th description position PS from the top in the program PG after update.

That is, the comparison part 124 compares the sections SC with the same description position PS (execution order EO) before and after update of the program PG.

The comparison part 124 compares the names (identification information), hierarchy numbers HN, and programs (source codes) of the sections SC with the same description position PS (execution order EO) before and after the program PG is updated. For example, the comparison part 124 compares, for example, the names, hierarchy numbers HN, and program (source code) in the section SC(x) of the program PG before update with the section SC(x) in the program PG after update. The comparison part 124 notifies the display control part 130 of a comparison result.

The display control part 130 displays information corresponding to the user operation received by the reception part 110 and the information stored in the project table 150 acquired by referring to the storage part 100 on a display screen of its own device, or display the information on an external display device. In particular, the display control part 130 displays information corresponding to the user operation received by the reception part 110 and the information stored in the program table 160 and the section table 170 on the display screen of its own device or display the information on an external display device.

For example, the display control part 130 displays the identification information of each of the section SC(m) and the section SC(n) having the parent-child relationship, using a tree structure indicating the parent-child relationship between both of the sections. Further, the display control part 130 displays the "result of comparing the sections SC before and after the update of the program PG" notified from the comparison part 124.

When there is a user operation for importing a section group SG consisting of the two or more sections SC for which the ancestor-descendant relationship is set, the addition part 140 stores the section group SG in the storage part 100, particularly, the section table 170.

Specifically, the addition part 140 adds the two or more section tables 170 for storing each of the two or more sections SC constituting the section group SG to the program table 160. Further, the addition part 140 stores each of the two or more sections SC constituting the section group SG in each of the two or more section tables 170 added to the program table 160 without changing a hierarchy (that is, each hierarchy number HN) to which each section belongs.

### (Details of storage part)

The storage part 100 is a storage device that stores various types of data that is used by the development assistance device 10. The storage part 100 may non-temporarily store (1) a control program executed by the development assistance device 10, (2) an OS program, (3) an application program for executing various functions of the development assistance device 10, and (4) various types of data read when the application program is executed. Data of (1) to (4) is stored in, for example, a non-volatile storage device such as a read only memory (ROM), a flash memory, an erasable programmable ROM (EPROM), an electrically EPROM (EEPROM (registered trademark)), or a hard disc drive (HDD). The development assistance device 10 may include a temporary storage part (not illustrated). The temporary storage part is a so-called working memory that temporarily stores data used in calculations, calculation results, and the like in the course of various types of processing executed by the development assistance device 10, and is configured of a volatile storage device such as a random access memory (RAM). Which data is to be stored in which storage device is appropriately determined on the basis of the purpose of use, convenience, cost, physical restrictions, or the like of the development assistance device 10. The storage part 100 further stores the project table 150, the program table 160, and the section table 170.

"Setting information of a controller such as the PLC 20" and "one or more programs PG" are stored in the project table 150. Here, the "one or more programs PG" is stored in one or more program tables 160. Therefore, the one or more program tables 160 each storing one program PG are stored in the project table 150.

In the example illustrated in FIG. 1, a first program table 160(1), a second program table 160(2), ···, an n-th program table 160(n) are stored in the project table 150. A first program PG(1) is stored in the first program table 160(1), a second program PG(2) is stored in the second program table 160(2), ···, an n-th program PG(n) is stored in the n-th program table 160(n).

In the present embodiment, when it is not necessary to particularly distinguish between the first program table 160(1), the second program table 160(2), ···, the n-th program table 160(n), these program tables are referred to as a "program table 160". Further, when it is not necessary to particularly distinguish between the first program PG(1), the second program PG(2), ···, and the n-th program PG(n), the programs are simply referred to as a "program PG".

The program PG created by using the development environment provided by the development assistance device 10 by the user is stored in the program table 160. As described above, the program PG is divided into a plurality of sections SC. Therefore, a plurality of section tables 170 each storing the plurality of sections SC is stored in the program table 160.

In the example of FIG. 1, the plurality of sections SC constituting the first program PG(1) is stored in the first program table 160(1), and specifically, a first section table 170(1-1) to an x-th section table 170(1-x) are stored. section SC(1-1) through section SC(1-x) constituting the first program PG(1) are stored in the first section table 170(1-1) to the x-th section table 170(1-x), respectively.

Further, the plurality of sections SC constituting the second program PG(2) is stored in the second program table 160(2), and specifically, the first section table 170(2-1) to the y-th section table 170(2-y) are stored. A section SC(2-1) to a section SC(2-y) constituting the second program PG(2) are stored in each of the first section table 170(2-1) to the y-th section table 170(2-y).

Similarly, the plurality of sections SC constituting the n-th program PG(n) is stored in the n-th program table 160(n), and specifically, a first section table 170(n-1) through a z-th section table 170(n-z) are stored. A section SC(n-1) to a section SC(n-z) constituting the n-th program PG(n) are stored in each of the first section table 170(n-1) to the z-th section table 170(n-z).

When it is not necessary to particularly distinguish between the first section table 170(1-1) through the x-th section table 170(1-x) stored in the first program table 160(1), the section tables are simply referred to as a "section table 170". Similarly, the plurality of section tables 170 stored in each of the second program table 160(2) and the n-th program table 160(n) is simply referred to as the "section table 170" when it is not necessary to particularly distinguish between the section tables.

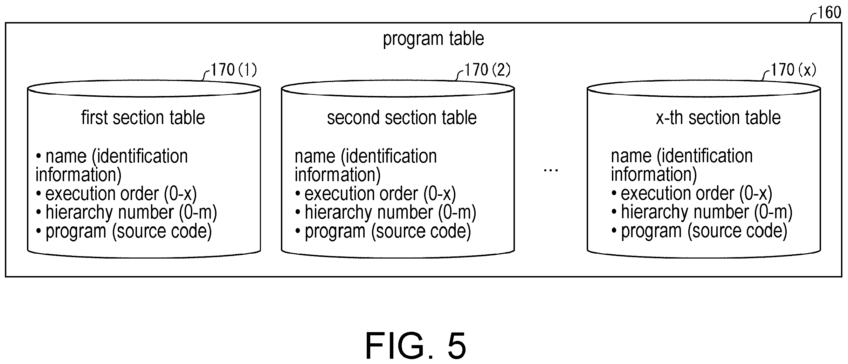

The plurality of sections SC constituting the program PG is stored in the section table 170. Specifically, a name (identification information), the execution order EO, and the hierarchy number HN of the section SC, and the content of the program PG (source code) in the section SC are stored in association with each other in the section table 170. FIG. 5 illustrates a configuration example of the section table 170.

### (Example of section table configuration)

FIG. 5 is a diagram illustrating a configuration example of the section table 170 (a first section table 170(1), a second section table 170(2), ···, an x-th section table 170(x) in the example illustrated in FIG. 5) stored in the storage part 100 by the development assistance device 10. As described above, when it is not necessary to distinguish between the first section table 170(1), the second section table 170(2), ···, the x-th section table 170(x), the section tables are referred to as the section table 170". For each section SC, the name (identification information), the execution order EO, and the hierarchy number HN of the section SC, and the content of the program PG (source code) in the section SC are stored in association with each other in the section table 170.

For example, each of the 11 sections SC constituting "Program PG: ST_Program0" illustrated to the right in FIG. 3 (that is, (B) of FIG. 3) is stored in the section table 170 as follows.

That is, the name (identification information), the execution order EO, and the hierarchy number HN of the "section SC(1): FrameSection, and the content of the program PG (source code) in the section SC are stored in the first section table 170(1). Specifically, "FrameSection" as the name of the section SC(1), "1" as the execution order EO, and "1" as the hierarchy number HN are stored in the first section table 170(1). Further, "source code in the section SC called FrameSection" as the content is stored in the first section table 170(1).

The name, execution order EO, and hierarchy number HN of "section SC (2): Frame_InitializeSection", and content of the program PG (source code) in the section SC are stored in the second section table 170(2). Specifically, "Frame_InitializeSection" as the name of the section SC(2) is stored in the second section table 170(2). "2" as the execution order EO and "2" as the hierarchy number HN are stored in the second section table 170(2). Furthermore, "source code in the section SC called Frame_InitializeSection" is stored as content in the second section table 170(2).

Similarly, the name, execution order EO, and hierarchy number HN of "section SC(3): Frame_Validation", and content of the program PG (source code) in the section SC are stored in the third section table 170(3). Specifically, "Frame_Validation" as the name of the section SC(3) is stored in the third section table 170(3). "3" as the execution order EO and "3" as the hierarchy number HN are stored in the third section table 170(3). Further, "source code in the section SC called Frame_Validation" is stored as the content in the third section table 170(3).

The name, execution order EO, and hierarchy number HN of "section SC (11): Inspection Section", and content of the program PG (source code) in the section SC are stored in the eleventh section table 170(11). Specifically, "InspectionSection" as the name of the section SC(11) is stored in the eleventh section table 170(11). "11" as the execution order EO and "1" as the hierarchy number HN are stored in the eleventh section table 170(11). Further, "source code in the section SC called InspectionSection" is stored as the content in the eleventh section table 170(11).

### §3. Operation example

Hereinafter, processing executed by the development assistance device 10 that has received a user operation for "setting a hierarchical relationship among the plurality of sections SC" will be described. The user operation "to set a hierarchical relationship among the plurality of sections SC" is, for example, "a user operation for "raising, by one level," the hierarchy to which a certain section SC(m) belongs" or a user operation for "lowering, by one level," the hierarchy to which the certain section SC(m) belongs"" illustrated in FIG. 4.

### (Processing to be executed according to user operation for assigning or changing hierarchy)

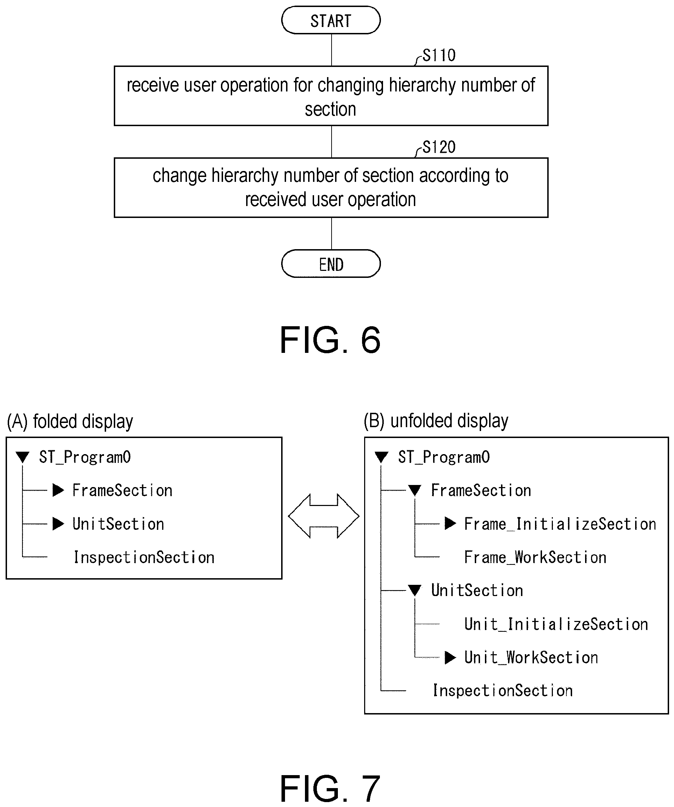

FIG. 6 is a flow diagram of "processing for setting a hierarchical relationship among the plurality of sections SC" that is executed by the development assistance device 10. As illustrated in FIG. 6, the reception part 110 first receives a user operation for changing the hierarchy number of the section SC (S110). The reception part 110 notifies the execution part 120 of content of the received user operation, and for example, notifies the hierarchy management part 121 of the execution part 120 that the user operation for changing the hierarchy number of the section SC has been received.

The hierarchy management part 121 changes the hierarchy number HN of the section SC that is a target in the user operation according to the user operation received by the reception part 110 (S120). For example, when the reception part 110 receives a user operation for raising the hierarchy of the section SC(m) by one level, the hierarchy management part 121 decreases a value of the hierarchy number HN of the section SC(m) by one. For example, when the reception part 110 receives a user operation for lowering the hierarchy of the section SC(m) by one level, the hierarchy management part 121 increases the value of the hierarchy number HN of the section SC(m) by one.

The control method executed by the development assistance device 10 described above using 6 can be summarized as follows. That is, the control method executed by the development assistance device 10 is a control method for the development assistance device that assists the user in creating the program PG that is executed by a control device such as the PLC 20. The program PG is divided into the plurality of sections SC that are units of processing set by the user regardless of a calling relationship (logical relationship). The plurality of sections SC is sequentially executed from the top description position PS to the bottom description position PS according to the description position PS in the program PG.

The control method executed by the development assistance device 10 includes a reception step (S110) and a hierarchy management step (S120). The reception step includes receiving a user operation for setting the hierarchical relationship among the plurality of sections SC. The hierarchy management step includes assigning the hierarchy number HN, which is information for specifying the hierarchy to which each of the plurality of sections SC belongs, to each of the plurality of sections SC according to the hierarchical relationship set in the "user operation received at the reception step".

According to the above configuration, the control method includes assigning the hierarchy number HN for specifying the hierarchy to which each of the plurality of sections SC belongs to each of the plurality of sections SC according to the hierarchical relationship set by the user when the user operation for setting a hierarchical relationship among the plurality of sections SC is received.

The "calling relationship" refers to a "calling-called relationship" among "a plurality of units (elements) constituting the program PG" such as program organization unit (POU) defined in IEC 61131-3. The "calling relationship" may also be referred to as a "referring-referred relationship" or a "logical relationship".

For example, when a certain POU calls (refers to) another POU in the program PG, the certain POU may be referred to as a calling source (a referring source), and the other POU called by the certain POU may be referred to as a calling destination (referring destination). It is said that there is a calling relationship with the certain POU as the calling source and the other POU as the calling destination between the certain POU and the other POU.

In the related art, it is not possible to set the hierarchical relationship among the plurality of sections SC constituting the program PG, and thus, it is not possible for the user to manage the plurality of sections SC in a format that reflects information having a mutual inclusion relationship such as a "process and function of a device".

On the other hand, the control method enables the user to set an "any hierarchical relationship" among the plurality of sections SC constituting the program PG regardless of the calling relationship (logical relationship). That is, the user can set a hierarchical relationship that reflects the information having a mutual inclusion relationship such as a "process and function of a device" among the plurality of sections SC constituting the program PG.

Therefore, the above control method has an effect that the user is enabled to "manage the plurality of sections SC constituting the program PG in a format that reflects information having a mutual inclusion relationship such as a "process and function of a device" regardless of a logical relationship".

Further, since the execution order EO of the sections SC is determined according to the simple rule of "sequential execution from the top description position PS to the bottom description position PS", the user can easily understand the execution order EO of each of the plurality of sections SC. The fact that "the user can easily understand the execution order EO of each of the plurality of sections SC" can be evaluated as the convenience of the sections SC.

The "hierarchy number HN (information for specifying the hierarchy)" assigned to each of the plurality of sections SC constituting the program PG does not have influence on the execution order EO of the section SC, that is, the hierarchy to which the section SC belongs does not have influence on the execution order EO of the section SC. Therefore, even when the hierarchical relationship is set among the plurality of sections SC by the user, there is no influence on the simple rule for the sections SC of "sequential execution from the top description position PS to the bottom description position PS", that is, there is no influence on the convenience of the section SC.

Therefore, the control method has an effect that the user is enabled to "manage the plurality of sections SC in a format that reflects information having a mutual inclusion relationship such as a "process and function of a device"" while maintaining the convenience of the section SC.

Further, the user can set a hierarchical relationship that reflects the information having a mutual inclusion relationship such as a "process and function of a device" among the plurality of sections SC. That is, the user can associate the two or more sections SC with each other according to the "relationship that is meaningful to the user".

The control method includes executing, for example, at least one of change, duplication, comparison, and the like of the description position PS in the program PG in units of the two or more associated sections SC according to the "relationship meaningful to the user".

Therefore, the control method has an effect that it is possible to execute the change, duplication, comparison, and the like of the description position PS in the program PG in units of the two or more associated sections SC according to the "relationship meaningful to the user".

### (Folded display and unfolded display)

FIG. 7 is a diagram illustrating an example of each of the folded display and the unfolded display. In particular, FIG. 7 illustrates a display example of the 11 sections SC such as FrameSection, Frame_InitializeSection, ···, InspectionSection illustrated to the right in FIG. 3 (that is, (B) of FIG. 3).

(A) of FIG. 7 illustrates an image example in which the folded display in which only a name (identification information) of a section SC corresponding to the parent node among the plurality of sections SC of which the parent-child relationship (hierarchical relationship) is set is displayed, and a name of the section SC corresponding to the child node is not displayed is executed. (B) of FIG. 7 illustrates an image example in which the unfolded display in which the name (identification information) of the section SC corresponding to the parent node and the name of the section SC corresponding to the child node among the plurality of sections SC in which the parent-child relationship (hierarchical relationship) has been set are displayed is executed.

As described using FIG. 3, for the 11 sections SC described above, the sections SC with "hierarchy number HN: 1" are three sections SC including FrameSection, UnitSection, and InspectionSection.

Further, the sections SC with "hierarchy number HN: 2" are four sections SC including Frame_InitializeSection, Frame_WorkSection, Unit_InitializeSection, and Unit_WorkSection.

Frame_InitializeSection and Frame_WorkSection are sections SC corresponding to "child nodes with FrameSection as a parent node". Further, Unit_InitializeSection and Unit_WorkSection are sections SC corresponding to "child nodes with UnitSection as a parent node".

### (Example of folded display)

The development assistance device 10 (display control part 130) displays only the name (identification information) of the section SC corresponding to the parent node among the plurality of sections SC of which the parent-child relationship (hierarchical relationship) is set, in the folded display illustrated in FIG. 7(A).

That is, in the folded display, the display control part 130 displays only the name "FrameSection among "FrameSection, Frame_InitializeSection, and Frame_WorkSection" having the parent-child relationship.

Similarly, in the folded display, the display control part 130 displays only the name "UnitSection" among "UnitSection, Unit_InitializeSection, and Unit_WorkSection" having the parent-child relationship.

### (Example of unfolded display)

The development assistance device 10 (display control part 130) displays the name of the section SC corresponding to the parent node among the plurality of sections SC of which the parent-child relationship (hierarchical relationship) is set, and the name of the section SC corresponding to the child node in the unfolded display illustrated in (B) of FIG. 7.

That is, in the unfolded display, the display control part 130 displays all the names of the three sections SC including "FrameSection, Frame_InitializeSection, and Frame_WorkSection" having the parent-child relationship.

Similarly, in the unfolded display, the display control part 130 displays all the names of the three sections SC including "UnitSection, Unit_Initialize Section, and Unit_WorkSection" having the parent-child relationship.

### (Description of tree-form display)

As described with reference to FIG. 7, the development assistance device 10 (the display control part 130) displays a relationship between the two or more sections SC having a parent-child relationship (ancestor-descendant relationship), for example, using a tree structure, that is, displays names (identification information) of the sections SC in a tree form. The display control part 130 can switch between the folded display and the unfolded display, as in a tree-form display generally used when a plurality of elements having a parent-child relationship (ancestor-descendant relationship) is displayed, for the names of the sections SC displayed in a tree form.

Specifically, the display control part 130 performs the folded display in which "the name of the section SC(n) corresponding to the child node is not displayed and the name of the section SC(m) corresponding to the parent node is displayed". Further, the display control part 130 can perform the unfolded display in which "the name of the section SC(n) corresponding to the child node and the name of the section SC(m) corresponding to the parent node are both displayed."

As described above, the development assistance device 10 includes the display control part 130. The display control part 130 displays the name (identification information) of each of the section SC(m) and the section SC(n) having the parent-child relationship using the tree structure indicating the parent-child relationship.

Further, the display control part 130 can switch between the folded display and the unfolded display. In the folded display, when display control part 130 displays the identification information of the section SC(m), the display control part 130 does not display the identification information of the section SC(n) corresponding to the child node of the section SC(m). In the unfolded display, when the display control part 130 displays the identification information of the section SC(m), the display control part 130 displays the identification information of the section SC(n) corresponding to the child node of the section SC(m) together with the identification information of the section SC(m).

According to the above configuration, when the development assistance device 10 displays the name of the section SC(m), the development assistance device 10 can switch between the folded display in which the name of the section SC(n) corresponding to the child node of the section SC(m) is not displayed and the unfolded display in which the name of the section SC(n) is displayed.

Here, since the name of the section SC(n) corresponding to the child node is not displayed in the folded display, the folded display is suitable as, for example, a display format when the user wants to confirms only the section SC(m) belonging to the higher hierarchy.

On the other hand, since the name of the section SC(n) corresponding to the child node is displayed in the unfolded display, the unfolded display is suitable as, for example, a display format when the user wants to confirm the section SC set as a child node for the certain section SC.

Therefore, the development assistance device 10 has an effect that it is possible to display each of the plurality of sections SC in a display format according to a level desired by the user.

### (Error display)

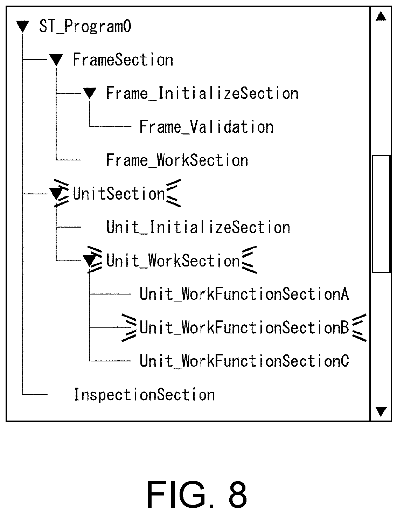

FIG. 8 illustrates an example in which the section SC belonging to a hierarchy higher than the section SC with an error, in addition to the section SC with an error, is highlighted. The development assistance device 10 (for example, the execution part 120) determines whether there is an error in a corresponding program (source code) for each of the plurality of sections SC constituting the program PG. The development assistance device 10 (the display control part 130) highlights the section SC determined to have an error. The display control part 130 also highlights the section SC corresponding to the ancestor node with the section SC determined to have an error as a descendant node, in addition to the section SC determined to have an error.

The "error" is, for example, a grammatical error, in other words, is a description (content) that cannot be compiled when a program (source code) corresponding to the section SC is attempted to be compiled.

For example, in the example illustrated in FIG. 8, the following parent-child relationship (ancestor-descendant) is set for the three sections SC including UnitSection, Unit_WorkSection, and Unit_WorkFunctionSectionB.

That is, a parent-child relationship with UnitSection as a parent node and Unit_WorkSection as a child node is set between UnitSection and Unit _WorkSection. A parent-child relationship with Unit_WorkSection as a parent node and Unit_WorkFunctionSectionB as a child node is set between Unit _WorkSection and Unit_WorkFunctionSectionB. That is, an ancestor-descendant relationship with UnitSection as a parent (ancestor) node and Unit_WorkFunctionSectionB as a descendant node is set between UnitSection and Unit_WorkFunctionSectionB.

When the execution part 120 determines that "there is an error in Unit_WorkFunctionSectionB", the display control part 130 highlights the Unit_WorkFunctionSectionB determined as "there is an error".

Furthermore, the display control part 130 also highlights the section SC corresponding to "an ancestor node with Unit_WorkFunctionSectionB determined as "there is an error" as a descendant node. That is, the display control part 130 highlights UnitSection and Unit_WorkSection.

Therefore, in the image example illustrated in FIG. 8, UnitSection, Unit_WorkSection, and Unit_WorkFunctionSectionB are highlighted.

As described with reference to FIG. 8, the development assistance device 10 (the display control part 130) executes the following display when there is a grammatical error (an error at the time of compilation) in the content (program or source code) of the section SC(n) belonging to the lower hierarchy. That is, the display control part 130 displays the name of the section SC belonging to the hierarchy higher than the hierarchy to which the section SC(n) belongs, in addition to the name of the section SC(n).

Specifically, the display control part 130 displays the name of the section SC corresponding to the ancestor node in the tree structure with the section SC(n) as the descendant node together with the name of the section SC(n). That is, when notifying the error, the display control part 130 can notify the user of the name of the section SC with an error and the name of the section SC corresponding to the ancestor node in the tree structure with the section SC with an error as a descendant node.

As described above, in the development assistance device 10, when certain description content in the program PG is grammatically incorrect, the display control part 130 displays the following information, in addition to the identification information (name) of the section SC containing the certain description content. That is, the display control part 130 displays the name of the section SC corresponding to the ancestor node in the tree structure with the section SC containing the certain description content as a descendant node, as the name of the section SC containing the error, in addition to the name of the section SC containing the certain description content.

According to the above configuration, when certain description content in the program PG is grammatically incorrect, the development assistance device 10 displays the name of the section SC containing the certain description content and the name of the section SC corresponding to the ancestor node of "the section SC containing the certain description content".

Therefore, the development assistance device 10 has an effect that it is possible to cause the user to confirm not only the section SC containing grammatically incorrect description content, but also the section SC corresponding to the ancestor node of the "section SC containing the grammatically incorrect description content".

### (Processing in units of section groups)

When there is a user operation for setting the "section SC corresponding to the ancestor node of the two or more sections SC having the ancestor-descendant relationship" as a target of processing such as changing of the execution order PS, cutting, copying, and exporting, the development assistance device 10 executes the following processing. That is, the development assistance device 10 (the selection part 122) selects, as a target of the above-described processing, the section group SG consisting of the section SC corresponding to the ancestor node and all sections corresponding to descendant nodes for the section SC corresponding to the ancestor node.

For example, when there is a user operation for selecting the section SC(m) as a target of the above-described processing, the selection part 122 selects the following section SC as the target of the above-described processing, in addition to section SC(m). That is, the selection part 122 selects all the sections SC corresponding to the descendant nodes with the section SC(m) as the ancestor node as the target of the above-described processing, in addition to the section SC(m) selected by the user.

### (Maintenance of relative positional relationship of two or more sections in section group)

When the development assistance device 10 executes processing in units of section groups SG, the development assistance device 10 collectively changes, for example, the respective execution orders EO (the description positions PS in the program PG) without changing the hierarchy number HN of each of the two or more sections SC constituting the section group SG.

In particular, when the development assistance device 10 executes processing in units of section groups SG, the development assistance device 10 does not change the relative positional relationship (order relationship) in the section group SG of the two or more sections SC constituting the section group SG. That is, when the development assistance device 10 executes the processing in units of section groups SG, the development assistance device 10 does not change a "relative execution orders OE' (relative description positions PS')" of the two or more sections SC constituting the section group SG.

For example, it is assumed that the section group SG(p) consists of the section SC(p), and section SC(p+1), section SC(p+2), ···, section SC(p+n) corresponding to descendant nodes with the section SC(p) as an ancestor node.

Further, the relative execution order OE' of the sections SC(p) to SC(p+n) in the section group SG(p) is an order of the section SC(p), section SC(p+1), section SC(p+2), ···, section SC(p+n). That is, a relative description position PS' of the section SC(p) to section SC(p+n) in the section group SG(p) is an order of the section SC(p), section SC(p+1), section SC(p+2), ···, section SC(p+n).

In this case, for example, when there is a user operation for changing the description position PS of the section group SG(p), the development assistance device 10 does not change a positional relationship between the two or more sections SC in the section group SG(p) and changes the description position PS of the section group SG(p). In other words, the development assistance device 10 does not change an order relationship between the two or more sections SC in the section group SG(p) and changes the description position PS of the section group SG(p).

The "relative execution order EO'" of the sections SC(p) to SC(p+n) in the section group SG(p) does not change before and after the description position PS of the section group SG(p) is changed. That is, there is no change in that the sections SC constituting the section group SG(p) are executed in an order of "section SC(p), section SC(p+1), section SC(p+2), ···, section SC(p+n)" in the section group SG(p).

In other words, the "relative description position PS'" of the sections SC(p) to SC(p+n) in the section group SG(p) does not change before and after the description position PS of the section group SG(p) is changed. That is, there is no change in that the sections SC constituting the section group SG(p) are described in an order of "section SC(p), section SC(p+1), section SC(p+2), ···, section SC(p+n)" in the section group SG(p).

For example, when the description position PS(p) of the section SC(p) in the program PG is changed from "x" to "y" due to the change of the description position PS of the section group SG(p), the development assistance device 10 (the order management part 123) executes the following processing. That is, the order management part 123 changes the execution order EO(p) of the section SC(p) from "x" to "y". Further, the order management part 123 changes the execution order EO(p+1) of the section SC(p+1) from "x+1" to "y+1". Further, the order management part 123 changes the execution order EO(p+2) of the section SC(p+2) from "x+2" to "y+2". Similarly, the order management part 123 changes the execution order EO(p+n) of the section SC(p+n) from "x+n" to "y+n".

Therefore, the development assistance device 10 enables, for example, "the user to collectively change the description positions PS of the two or more sections SC having an ancestor-parent-child relationship without changing the relative positional relationship (order relationship) between the sections". The same applies not only to "changing the execution order EO" but also to processing such as "cut", "copy", "paste", "import", and "export".

That is, in the development assistance device 10, the user can execute at least one of changing the execution order EO, cutting, copying, pasting, importing, exporting, and changing the hierarchy in units of section groups SG. The section group SG is a set of sections SC including (1) one section SC and (2) all sections SC corresponding to descendant nodes with the one section SC as an ancestor node.

According to the above configuration, the development assistance device 10 enables "the user to execute at least one of changing the execution order EO, cutting, copying, pasting, importing, exporting, and changing the hierarchy in units of section groups SG".

Here, the section group SG consists of (1) the section SC corresponding to the ancestor node, and (2) all sections SC corresponding to descendant nodes for the section SC as the ancestor node. The parent-child relationship between the two or more sections SC constituting the section group SG is set according to the hierarchical relationship "set arbitrarily between the two or more sections SC by the user" by the development assistance device 10. Therefore, the section group SG is a unit set arbitrarily for the plurality of sections SC constituting the program PG by the user, and can be regarded as a unit consisting of the two or more sections SC.

Therefore, the development assistance device 10 has an effect that it is possible to execute at least one of changing the execution order EO, cutting, copying, pasting, importing, exporting, and changing the hierarchy "in units set arbitrarily for the plurality of sections SC by the user".

The development assistance device 10 includes the selection part 122. When there is a user operation for selecting the section SC(m), the selection part 122 selects, as a target, the section group SG(m) consisting of the section SC(m), and all sections SC corresponding to descendant nodes in a tree structure with the section SC(m) as an ancestor node.

According to the above configuration, when there is a user operation for selecting the section SC(m), the development assistance device 10 selects, as a target, a "section group SG(m) consisting of the section SC(m) and all sections SC corresponding to descendant nodes of the section SC(m).".

Here, the section group SG(m) consists of the section SC(m) and all the sections SC corresponding to the descendant nodes for the section SC(m) serving as an ancestor node. The parent-child relationship between the two or more sections SC constituting the section group SG(m) is determined according to the hierarchical relationship "set arbitrarily between the two or more sections SC by the user" by the development assistance device 10. Therefore, the section group SG is a unit set arbitrarily for the plurality of sections SC constituting the program PG by the user, and can be regarded as a unit consisting of the two or more sections SC. The user operation for selecting the section SC(m) can be regarded as the following user operation. That is, the user operation can be regarded as a user operation for selecting the section group SG(m) "consisting of the section SC(m), and all the sections SC corresponding to descendant nodes in a tree structure with the section SC(m) as an ancestor node" as the target of processing.

Therefore, the development assistance device 10 has an effect that the user is enabled to select the two or more sections SC including the section SC(m) according to "a unit arbitrarily set for the plurality of sections SC by the user" when the user selects the section SC(m). In other words, when the section SC(m) is selected by the user, the development assistance device 10 has an effect that it is possible to select the section group SG(m) with the section SC(m) as an ancestor node according to the selection. That is, when the section SC(m) is selected, the development assistance device 10 has an effect that it is possible to select the section group SG(m) including the section SC(m) and another section SC associated with the section SC(m) by the user, as the selected target.

Processing such as changing of the execution order EO (description position PS), cutting, copying, pasting, importing, and exporting that are executed in units of section groups SG by the development assistance device 10 will be described hereinafter.

### (Example of changing description position in units of section groups)

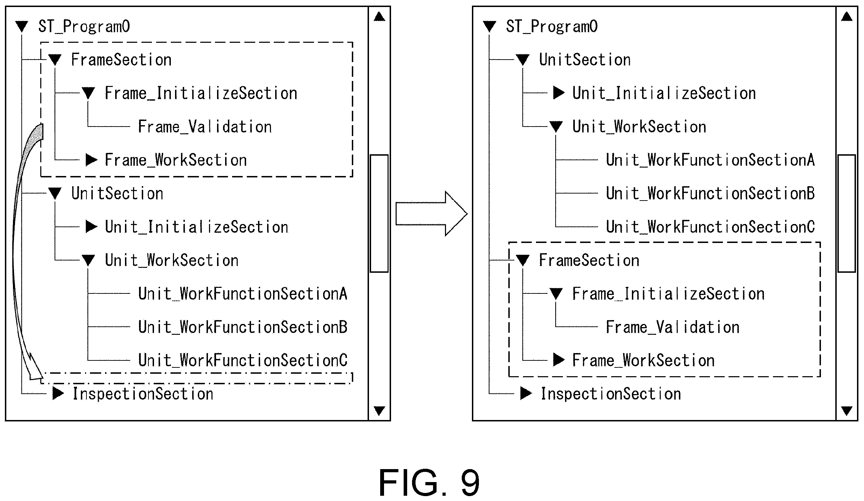

FIG. 9 is a diagram illustrating an example of a user operation for collectively changing the description positions PS of the plurality of sections SC included in the section group SG in units of section groups SG. Specifically, FIG. 9 illustrates a situation in which "there has been a user operation for replacing the description positions PS of FrameSection (section SC(1)) and UnitSection (section SC(5)) belonging to the same hierarchy." The image example illustrated to the left in FIG. 9 is an image example displayed before the development assistance device 10 (the display control part 130) executes the processing corresponding to the above-described user operation. The image example shown on the right side in FIG. 9 is an image example displayed after the development assistance device 10 (the display control part 130) executes the processing corresponding to the above-described user operation.

In the image example illustrated to the left in FIG. 9, each of the following three sections SC corresponds to a "descendant node in the tree structure with FrameSection (section SC(1)) as an ancestor node". That is, each of Frame_InitializeSection (section SC(2)), Frame_Validation (section SC(3)), and Frame_WorkSection (section SC(4)) corresponds to the descendant node.

Therefore, in the description of FIG. 9, a set of four sections SC from section SC(1) to section SC(4) having an ancestor-descendant relationship is referred to as section group SG(1).

Further, in the image example illustrated to the left in FIG. 9, each of the following two sections SC corresponds to a "descendant node in a tree structure with UnitSection (section SC(5)) as an ancestor node". That is, Unit_InitializeSection (section SC(6)) and Unit_WorkSection (section SC(7)) each correspond to descendant nodes. Further, each of the following three sections SC corresponds to a "descendant node in a tree structure with Unit_WorkSection (section SC(7)) as an ancestor node". That is, each of Unit_WorkFunctionSectionA (section SC(8)), Unit_WorkFunctionSectionB (section SC(9)), and Unit_WorkFunctionSectionC (section SC(10)) corresponds to a descendant node.

Therefore, in the description of FIG. 9, a set of six sections SC from the section SC(5) to the section SC(10) having an ancestor-descendant relationship is referred to as a section group SG(5).

As illustrated in FIG. 9, the user collectively changes the description position PS of each of the four sections SC constituting the section group SG(1) to a position below the description position PS of the section group SG(5) by using the development assistance device 10. Specifically, the user can change the description position PS of section group SG(1) to a position directly below the description position PS(10) of the section SC(10) with the lowest description position PS in the section group SG(5).

Moreover, in the section group SG(1) in which the description position PS has been changed to a position lower the description position PS of the section group SG(5), the relative description position PS' of each of the four sections SC constituting the section group SG(1) is not changed. That is, in the image example on the left side in FIG. 9 and the image example on the right side in FIG. 9, the description position PS(1) of the section SC(1) is immediately higher than the description position PS(2) of the section SC(2), and is not changed. In the image example on the left side in FIG. 9 and the image example on the right side in FIG. 9, the description position PS(2) of the section SC(2) is immediately higher than the description position PS(3) of the section SC(3), and is not changed. In the image example on the left side in FIG. 9 and the image example on the right side in FIG. 9, the description position PS(3) of the section SC(3) is immediately higher than the description position PS(4) of the section SC(4), and is not changed. In the image example on the left side in FIG. 9 and the image example on the right side in FIG. 9, the description position PS(4) of the section SC(4) is lowest among the description position PS(1) to the description position PS(4), and is not changed.

As described with reference to FIG. 9, when the section SC(p) and the section SC(q) belong to the same hierarchy, the user can perform replacement of the description positions PS in units of section groups SG as follows. That is, the user can replace the description position PS of the section group SG(p) with the section SC(p) as an ancestor node and the description position PS of the section group SG(q) with the section SC(q) as an ancestor node. The user can replace the description positions PS of the sections SC, including the sections SC belonging to the hierarchy below the section SC(p), with the description position PS of the section SC(q) on the same hierarchy as the section SC(p) by selecting the section SC(p). More precisely, the user can replace the description position PS of the section group SG(p) with the section SC(p) as an ancestor node with the description position PS of the section group SG(q) with the section SC(q) as an ancestor node by selecting the section SC(p). Moreover, the user can change the description position PS of the section group SG without changing the relative positional relationship between the two or more sections SC constituting the section group SG.

(Processing executed at the time of changing description position in units of section groups)

In FIG. 9, the order management part 123 sets the execution order EO of the program PG before the above-described user operation is received, that is, each of the 11 sections SC constituting the program PG in the image example illustrated to the left in FIG. 9.

That is, the order management part 123 sets the execution order EO(1) of the section SC(1) called FrameSection in the program PG in the image example illustrated to the left in FIG. 9 to "1". Further, the order management part 123 sets the execution order EO(2) of the section SC(2) called Frame_InitializeSection to "2". Further, the order management part 123 sets the execution order EO(3) of the section SC(3) called Frame_Validation to "3", as follows.

Similarly, the order management part 123 sets the execution order EO(4) of the section SC(4) called Frame_WorkSection to "4" and the execution order EO(5) of the section SC(5) called UnitSection to "5". The order management part 123 sets the execution order EO(6) of the section SC(6) called Unit_Initialize Section to "6" and the execution order EO(7) of the section SC(7) called Unit_WorkSection to "7". The order management part 123 sets the execution order EO(8) of the section SC(8) called Unit_WorkFunctionSectionA to "8" and the execution order EO(9) of the section SC(9) called Unit_WorkFunctionSectionB to "9". The order management part 123 sets the execution order EO(10) of the section SC(10) called Unit_WorkFunctionSectionC to "10" and the execution order EO(11) of the section SC(11) called InspectionSection to "11".

In FIG. 9, the order management part 123 sets the execution order EO of the program PG after the user operation described above is received, that is, each of the 11 sections SC constituting the program PG in the image example illustrated to the right in FIG. 9, as follows.

That is, for the section SC(5) called UnitSection in the program PG in the image example illustrated to the left in FIG. 9, the order management part 123 sets the execution order EO(5) to "1". Further, for section SC(6) called Unit_Initialize Section, the order management part 123 sets the execution order EO(6) to "2". Furthermore, for section SC(7) called Unit_WorkSection, the order management part 123 sets the execution order EO(7) to "3".

Similarly, the order management part 123 sets the execution order EO(8) of the section SC(8) called Unit_WorkFunctionSectionA to "4". The order management part 123 sets the execution order EO(9) of the section SC(9) called Unit_WorkFunctionSectionB to "5". The order management part 123 sets the execution order EO(10) of the section SC(10) called Unit_WorkFunctionSectionC to "6". The order management part 123 sets the execution order EO(1) of the section SC(1) called FrameSection to "7" and the execution order EO(2) of the section SC(2) called Frame_InitializeSection to "8". The order management part 123 sets the execution order EO(3) of the section SC(3) called Frame_Validation to "9" and the execution order EO(4) of the section SC(4) called Frame_WorkSection to "10". The order management part 123 sets the execution order EO(11) of the section SC(11) called InspectionSection to "11".

That is, the order management part 123 collectively changes the execution orders EO of the two or more sections SC constituting the section group SG according to the changed description position PS when the user changes the description position PS of the section group SG.

As has been described with reference to FIG. 9, when there is a user operation for replacing the description positions PS of the two sections SC belonging to the same hierarchy, the development assistance device 10 also executes change of the description position PS, including the section SC corresponding to each descendant node. For example, the development assistance device 10 executes the following processing when a user operation for "replacing the description position PS(p) of the section SC(p) with the description position PS(q) of the section SC(q) belonging to the same hierarchy as that to which the section SC(p) belongs" is received.

That is, the development assistance device 10 (the selection part 122) selects, as a change object of the description position PS, "the section group SG(p) consisting of the section SC(p) and all sections SC corresponding to "descendant nodes with the section SC(p) as an ancestor node"". Further, the selection part 122 selects, as a change object of the description position PS, "the section group SG(q) consisting of the section SC(q) and all section SC corresponding to "descendant nodes with the section SC(q) as an ancestor node"". The development assistance device 10 (the execution part 120) replaces the description position PS of the section group SG(m) with the description position PS of the section group SG(n) according to the user operation. The development assistance device 10 (the order management part 123) collectively changes the execution order EO of each of the two or more sections SC constituting each of the section group SG(m) and the section group SG(n) according to the changed description position PS.

The development assistance device 10 can change the description position PS of the section SC in the program, with each section group SG consisting of the two or more sections SC as a unit. That is, the development assistance device 10 enables "the user to collectively change the description positions PS of the two or more sections SC".

As described above, the development assistance device 10 includes the order management part 123 that manages the execution order EO of each of the plurality of sections SC. The order management part 123 determines the execution order EO of the sections SC according to the description positions PS of the sections SC in the program PG regardless of the hierarchy to which the sections SC belong. Specifically, the order management part 123 determines the execution order EO of the section SC so that the execution order EO of the section SC with the higher description position PS in the program PG is earlier than the execution order EO of the section SC with the lower description position PS.

According to the above configuration, the development assistance device 10 determines the execution order EO of the sections SC according to the simple rule of "sequential execution from the top description position PS to the bottom description position PS" regardless of the hierarchy to which the section SC belongs.

Further, since the execution order EO of the sections SC is determined according to the simple rule of "sequential execution from the top description position PS to the bottom description position PS", the user can easily understand the execution order EO of each of the plurality of sections SC. The fact that "the user can easily understand the execution order EO of each of the plurality of sections SC" can be evaluated as the convenience of the sections SC.

Therefore, the development assistance device 10 has an effect that the user is enabled to "manage the plurality of sections SC in a format that reflects information having a mutual inclusion relationship such as a "process and function of a device"" while maintaining the convenience of the section SC.

When there is a user operation for disposing the section group SG(p) with the section SC(p) as an ancestor node at a position immediately before the section SC(q) belonging to the same hierarchy as that to which the section SC(p) belongs, the order management part 123 executes the following processing. That is, the order management part 123 does not change the relative execution order EO in the section group SG(p) of the two or more sections SC included in the section group SG(p). Further, the order management part 123 sets the execution order EO of the section SC with the lowest description position PS among the sections SC included in the section group SG(p) to the execution order EO immediately before the execution order EO(q) of the section SC(q).

Here, the section group SG(p) with the section SC(p) as an ancestor node consists of the section SC(p), and all the sections SC corresponding to descendant nodes in the tree structure with the section SC(p) as an ancestor node.

According to the above configuration, when there is the user operation for disposing the section group SG(p) with the section SC(p) as an ancestor node at the position immediately before the section SC(q) belonging to the same hierarchy as that to which the section SC(p) belongs, the development assistance device 10 executes the following processing. That is, the development assistance device 10 sets the execution order EO of the section SC with the lowest description position PS among the sections SC included in the section group SG(p) to the execution order EO immediately before the execution order EO(q) of the section SC(q). The development assistance device 10 does not change the "relative execution order EO'" of the two or more sections SC included in the section group SG(p), that is, does not change the respective relative order relationships in the section group (p).

Therefore, the development assistance device 10 has an effect that it is possible to collectively change the execution orders EO of the two or more sections SC included in the section group SG(p) according to "the unit arbitrarily set for the plurality of sections SC by the user". That is, the development assistance device 10 has an effect that it is possible to collectively change the execution orders EO of the two or more sections SC included in the section group SG(p) to before the execution order EO(q) of the section SC(q).

When there is a user operation for disposing the section group SG(p) with the section SC(p) as an ancestor node at a position immediately after the section SC(q) belonging to the same hierarchy as that to which the section SC(p) belongs, the order management part 123 executes the following processing. That is, the order management part 123 does not change the relative execution order EO in the section group SG(p) of the two or more sections SC included in the section group SG(p). Further, the order management part 123 sets the execution order EO(p) of the section SC(p) to one position after the execution order EO of "the section SC with the lowest description position PS among the sections SC corresponding to the descendant nodes in the tree structure with the section SC(q) as an ancestor node".

Here, the section group SG(p) with the section SC(p) as an ancestor node consists of the section SC(p), and all the sections SC corresponding to descendant nodes in the tree structure with the section SC(p) as an ancestor node.

According to the above configuration, when there is a user operation for disposing the section group SG(p) with the section SC(p) as an ancestor node at a position immediately after the section SC(q) belonging to the same hierarchy as that to which the section SC(p) belongs, the development assistance device 10 executes the following processing. That is, the development assistance device 10 sets the execution order EO(p) of the section SC(p) to one position after the execution order EO of "the section SC with the lowest description position PS among the sections SC corresponding to the descendant nodes for the section SC(q) as an ancestor node". The development assistance device 10 does not change the "relative execution order EO'" of the two or more sections SC included in the section group SG(p), that is, does not change the relative order relationship of the respective sections in the section group SG(p).

Therefore, the development assistance device 10 has an effect that it is possible to collectively change the execution orders EO of the two or more sections SC included in the section group SG(p) according to "the unit arbitrarily set for the plurality of sections SC by the user". That is, the development assistance device 10 has an effect that it is possible to change the execution orders EO of the two or more sections SC included in the section group SG(p) to after the execution order EO(q) of the section SC(q).

### (Examples of cutting, copying, pasting, and the like in units of section groups)

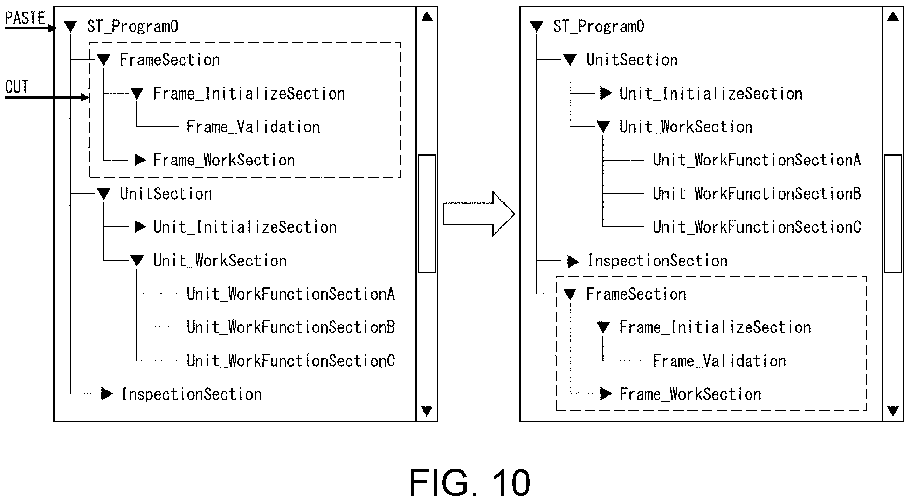

FIG. 10 is a diagram illustrating an example of a user operation for collectively "cutting" the plurality of sections SC included in the section group SG in units of the section group SG, and a user operation for collectively "pasting" the plurality of sections SC included in the section group SG.

The image example illustrated to the left in FIG. 10 is the same as the image example illustrated to the left in FIG. 9. Therefore, in the description of FIG. 10, a set of four sections SC from section SC(1) to section SC(4) having an ancestor-descendant relationship is referred to as section group SG(1), similarly to FIG. 9. That is, a set of four sections SC from FrameSection (section SC(1)) to Frame_WorkSection (section SC(4)) is referred to as the section group SG(1).

Similarly, in the description of FIG. 10, a set of six sections SC from the section SC(5) to the section SC(10) having an ancestor-descendant relationship is referred to as a section group SG(5). That is, a set of six sections SC from UnitSection (section SC(5)) to Unit_WorkFunctionSectionC (section SC(10)) is called the section group SG(5).

### ("Cutting" processing in units of section groups)

When there is a user operation (CUT) for "cutting" the section group SG(1) from "program PG: ST_Program0" in the image example illustrated to the left in FIG. 10, the development assistance device 10 executes the following processing.

First, the development assistance device 10 moves each of the first section table 170(1) through the fourth section table 170(4) storing the sections SC(1) through SC(4), from the program table 160 to a temporary evacuation table (not illustrated).

Next, the order management part 123 sets the execution order EO(5) of the section SC(5) called UnitSection in the program PG to "1". Further, the order management part 123 sets the execution order EO(6) of the section SC(6) called Unit_Initialize Section to "2". Furthermore, the order management part 123 sets the execution order EO(7) of the section SC(7) called Unit_WorkSection to "3".

Similarly, the order management part 123 sets the execution order EO(8) of the section SC(8) called Unit_WorkFunctionSectionA to "4". The order management part 123 sets the execution order EO(9) of the section SC(9) called Unit_WorkFunctionSectionB to "5". The order management part 123 sets the execution order EO(10) of the section SC(10) called Unit_WorkFunctionSectionC to "6". The order management part 123 sets the execution order EO(11) of the section SC(11) called InspectionSection to "7".

The display control part 130 executes a display according to the program table 160 in which the four section tables 170 from the first section table 170(1) to the fourth section table 170(4) have been deleted, and that has been updated as described above by the order management part 123.

### ("Paste" processing in units of section groups)

When there is a user operation for pasting the section group SG(1) cut earlier from the program PG, the development assistance device 10 executes the following processing.

First, the development assistance device 10 moves each of the first section table 170(1) through the fourth section table 170(4) storing the sections SC(1) through SC(4), from the temporary evacuation table (not illustrated) to the program table 160.

Next, the order management part 123 updates the execution order EO of each of the two or more sections SC constituting the section group SG(1) according to a paste position of the section group SG(1). For example, when it is assumed that the section group SG(1) is pasted to a last position of the program PG before pasting, as illustrated to the right in FIG. 10, according to a user operation for pasting the section group SG(1), the order management part 123 executes the following processing.

That is, the order management part 123 sets the execution order EO(1) of the section SC(1) called FrameSection to "8" and the execution order EO(2) of the section SC(2) called Frame_InitializeSection to "9". The order management part 123 sets the execution order EO(3) of the section SC(3) called Frame _Validation to "10" and the execution order EO(4) of the section SC(4) called Frame_WorkSection to "11".

The display control part 130 executes a display according to the program table 160 (and the section table 170) updated as described above by the order management part 123, and specifically, displays the screen example illustrated to the right in FIG. 10.

### (Examples of copying, importing, exporting, and the like in units of section groups)

When there is a user operation for copying the section group SG(1), the development assistance device 10 (the execution part 120) executes the following processing. That is, the execution part 120 copies each of the first section table 170(1) through the fourth section table 170(4) from the program table 160, and adds the four copied tables to the temporary evacuation table (not illustrated).

When there is a user operation for exporting the section group SG(1), the development assistance device 10 (the execution part 120) executes the following processing. That is, the execution part 120 exports the information stored in each of the first section table 170(1) through fourth section table 170(4). Specifically, the execution part 120 exports the name (identification information), the execution order EO, and the hierarchy number HN of each of the sections SC(1) to SC(4), and the content of the program PG (source code) in the section SC.

When there is a user operation for importing "the section group SG(m) consisting of the section SC(m) and one or more sections SC corresponding to descendant nodes in the tree structure with the section SC(m) as an ancestor node", the development assistance device 10 executes the following processing.

That is, first, the addition part 140 adds, to the program table 160, the two or more section tables 170 for storing each of the two or more sections SC constituting the section group SG(m). Thereafter, the addition part 140 stores each of the two or more sections SC constituting the section group SG(m) in each of the two or more section tables 170 added to the program table 160.

Further, the order management part 123 updates the execution order OR of each of the two or more sections SC constituting the section group SG(m) stored in each of the two or more section tables 170 by the addition part 140.

Specifically, the order management part 123 does not change a "relative execution order EO'" in the section group (m) of each of the two or more sections SC constituting the section group SG(m), and sets each execution order EO. That is, the order management part 123 sets the execution order EO of each of the two or more sections SC constituting the section group SG(m) so that the relative order relationship (relative positional relationship) of each of the two or more sections SC constituting the section group SG(m) is not changed.

For example, it is assumed that the section group SG(m) consists of the section SC(m), section SC(m+1), section SC(m+2), ···, section SC(m+n), and the execution order OR of these sections SC is in this order. It is assumed that, in the program table 160 before the section group SG(m) is imported, "x" is stored in the execution order OP of the section table 170 storing the section SC with the latest execution order EO.

In this case, when the addition part 140 adds "the two or more section tables 170 storing each of the two or more sections SC constituting the section group SG(m)" to the program table 160, the order management part 123 executes the following processing.

That is, the order management part 123 stores "x+1" in the execution order OP of the section table 170(m) storing the section SC(m). Further, the order management part 123 stores "x+2" in the execution order OP of the section table 170(m+1) storing the section SC(m+1), and stores "x+3" in the execution order OP of the section table 170(m+2) storing the section SC(m+2). Similarly, the order management part 123 stores "x+n+1" in the execution order OP of the section table 170(m+n) storing the section SC(m+n).

That is, the development assistance device 10 executes the following processing when there is a user operation for importing the section group SG(m). That is, the development assistance device 10 does not change the relative execution order EO' of each of the two or more sections SC constituting the section group SG(m), and adds the two or more section tables 170 storing the respective sections SC to the program table 160.

As has been described above with reference to FIG. 10, the development assistance device 10 executes the following processing when there is a user operation for selecting the section SC(m) as a target of processing of at least one of cutting, copying, pasting, importing, and exporting. That is, the development assistance device 10 selects a "section group SG(m) consisting of the section SC(m) and all the sections SC corresponding to the "descendant nodes with the section SC(m) as an ancestor node", as the target of the above-described processing.

Therefore, the development assistance device 10 enables "the user to cut, copy, or export all the sections SC corresponding to the "descendant nodes with the section SC(m) as an ancestor node" together with the selected section SC(m)". The development assistance device 10 enables "the user to collectively select the two or more sections SC as targets of processing of at least one of cutting, copying, pasting, importing, and exporting". That is, the user can select the certain section SC(m) to perform an operation such as cutting in units of the section group SG(m) including the section SC on the hierarchy below the hierarchy to which the section SC(m) belongs, by using the development assistance device 10.

As described above, the development assistance device 10 includes the addition part 140. When there is a user operation for importing the section group SG(m), the addition part 140 stores each of the two or more sections SC constituting the section group SG(m) in the storage part 100 without changing the hierarchy to which each section belongs. Specifically, the addition part 140 adds, to the program table 160, the two or more section tables 170 for storing each of the two or more sections SC constituting the section group SG(m). Thereafter, the addition part 140 stores each of the two or more sections SC constituting the section group SG(m) in each of the two or more section tables 170 added to the program table 160 without changing the respective hierarchy numbers HN.

Further, when the addition part 140 adds the two or more section tables 170 "each storing the two or more sections SC constituting the section group SG(m)" to the program table 160, the order management part 123 executes the following processing.

That is, the order management part 123 sets the execution order EO of the section SC with the first execution order EO among the two or more sections SC constituting the section group SG(m) to one position after the execution order EO of the section SC to be executed latest at a time point before importing.

Specifically, the order management part 123 sets the execution order EO(m) of the section SC(m) corresponding to the ancestor node in the section group SG(m) to one position after the execution order EO of the section SC to be executed latest at a time point before importing. For example, when the section SC to be executed latest at a time point before the import is the section SC(x) and the execution order EO is "x", the order management part 123 sets the execution order EO(m) of the section SC(m) to "x+1".

Further, the order management part 123 sets each execution order EO without changing each "relative execution order EO'" (that is, relative order relationship) in the section group (m) of the two or more sections SC constituting the section group SG(m).

Here, the section group SG(m) consists of the section SC(m), and all the sections SC corresponding to descendant nodes in a tree structure with the section SC(m) as an ancestor node.

According to the above configuration, when there is a user operation for importing the section group SG(m) with the section SC(m) as an ancestor node, the development assistance device 10 stores the two or more sections constituting the section group SG(m) in the storage part 100. In particular, the development assistance device 10 stores the section group SG(m) in the storage part 100 while maintaining the ancestor-descendant relationship between the two or more sections SC constituting the section group SG(m).

Specifically, the development assistance device 10 stores each of the two or more sections SC constituting the section group SG(m) in the storage part 100 (in particular, the section table 170) without changing the hierarchy to which each section belongs (that is, each hierarchy number HN). The development assistance device 10 sets the execution order EO(m) of the sections SC(m) to one position after the execution order EO(x) of the section SC(x) without changing the "relative execution order EO'" of the two or more sections SC constituting the section group SG(m). The section SC(x) is the section SC that is executed latest before the import is performed.

Therefore, the development assistance device 10 has an effect that it is possible to import the two or more sections SC to which the parent-child relationship (ancestor-descendant relationship) has been assigned by the user at a time, instead of importing the two or more sections SC one by one.

In particular, the development assistance device 10 has an effect that it is possible to import, at a time, the two or more sections SC to which the parent-child relationship (ancestor-descendant relationship) has been assigned by the user while maintaining the ancestor-descendant relationship between the sections.

### (Display example of comparison result before and after update)

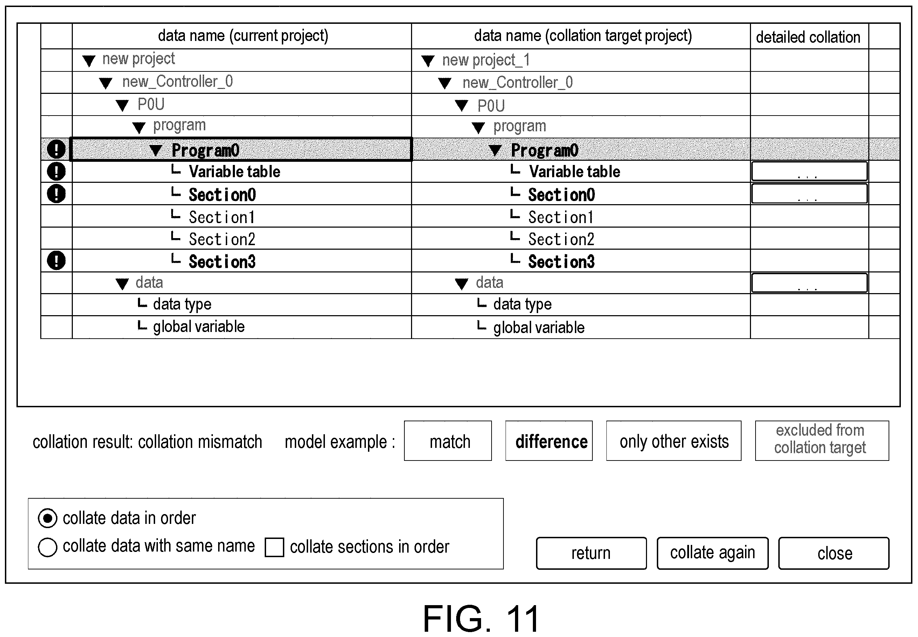

FIG. 11 is a diagram illustrating an image example showing a comparison result before and after update of the program PG. When the program PG is updated, the development assistance device 10 (in particular, the comparison part 124) compares the program PG before update with the program PG after update. The development assistance device 10 (in particular, the display control part 130) displays the comparison result of the programs PG before and after update from the comparison part 124, and for example, displays an image example illustrated in FIG. 11 as the comparison result.

In the comparison of the programs PG before and after update, the comparison part 124 compares each of the plurality of sections SC constituting the program PG before update with each of the plurality of sections SC constituting the program PG after update.

The comparison part 124 compares, for example, the sections SC having the corresponding order (description position PS) in the program PG before update and the program PG after update, that is, compares the sections SC with the same execution order EO. Since the execution order EO is determined only by the description position PS, the above can be rephrased that "the comparison part 124 compares the sections SC with the same description position PS between the program PG before update and the program PG after update."

Specifically, the comparison part 124 compares the section SC(1) with the first description position PS in the program PG before update with the section SC(1) with the first description position PS in the program PG after update. Further, the comparison part 124 compares the section SC(2) with the second description position PS from the top in the program PG before update with the section SC(2) with the second description position PS from the top in the program PG after update. Similarly, the comparison part 124 compares the section SC(3) with the third description position PS from the top in the program PG before update with the section SC(3) with the third description position PS from the top in the program PG after update.

That is, the comparison part 124 compares the section SC(m) with the x-th description position PS from the top in the program PG before update with the section SC(m) with the x-th description position PS from the top in the program PG after update.

The comparison part 124 compares, for example, the names (identification information), hierarchy numbers HN, and programs (source codes) of the section SC(m) in the program PG before update and the section SC(m) in the program PG after update.

Specifically, the comparison part 124 compares the name of the section SC(m) in the program PG before update with the name of the section SC(m) in the program PG after update, and notifies the display control part 130 of a comparison result. Further, the comparison part 124 compares the hierarchy number HN of the section SC(m) in the program PG before update with the hierarchy number HN of the section SC(m) in the program PG after update, and notifies the display control part 130 of a comparison result. Further, the comparison part 124 compares the program (source code) of the section SC(m) in the program PG before update with the program (source code) of the section SC(m) in the program PG after update, and notifies the display control part 130 of a comparison result.

When the comparison part 124 determines that "at least one of the name, the hierarchy number HN, and the program of both of the sections are different before and after update" for the section SC(m), the display control part 130 highlights the section SC(m). When the section SC(m) is highlighted, the display control part 130 may also execute highlighting of the section SC corresponding to the "ancestor node having the section SC(m) as a descendant node".

In the example illustrated in FIG. 11, the display control part 130 highlights a "variable table", "Section0", and "Section3" as the sections SC of which at least one of the name, the hierarchy number HN, and the content (source code) has been changed. Further, the display control part 130 also highlights "Program0" including these sections SC.

That is, the development assistance device 10 (in particular, the comparison part 124) compares the sections SC having corresponding orders (description positions PS) since the description position PS of the section SC is not related to the execution order EO of the section SC when the program PG is updated by the user. Further, the development assistance device 10 (in particular, the comparison part 124) compares the hierarchy numbers HN having the corresponding orders (description positions PS).

In other words, when the program PG is updated (changed) by the user, the development assistance device 10 compares the hierarchy information (hierarchy number HN) of the section SC in the program PG before update with the hierarchy information (hierarchy number HN) of the section SC in the program PG after update. Further, the development assistance device 10 compares the content (source code) of the section SC in the program PG before update with the content of the section SC in the program PG after update.

Further, the development assistance device 10 can merge the content (source code) of the section SC in the program PG before update with the content of the section SC in the program PG after update. For example, the development assistance device 10 can merge the content (source code) of the sections SC having the corresponding order (description position PS) in the program PG before update and the program PG after update.

As described above, the development assistance device 10 includes the comparison part 124. When the comparison part 124 compares the program PG before update with the program PG after update, the comparison part 124 performs comparison to determine whether the hierarchy before update and hierarchy after update of the section SC(m) match.

According to the above configuration, when the development assistance device 10 compares the program PG before update with the program PG after update, the development assistance device 10 performs comparison to determine whether the hierarchy before update and hierarchy after update of the section SC(m) match.

Therefore, the development assistance device 10 has an effect that "the user is enabled to confirm the section SC to which only the hierarchy to which the section SC belongs has been changed before and after update".

### § 4. Modification examples

So far, an example in which the display control part 130 displays each of the plurality of sections SC constituting the program PG has been described. However, the display control part 130 may be able to switch between a "section display mode" in which each of the plurality of sections SC constituting the program PG is displayed and a "POU display mode" in which a plurality of POUs constituting the program PG is displayed. In the "POU display mode", the display control part 130 may display a logical relationship (a calling relationship) between the plurality of POUs constituting the program PG.

Further, an example in which the comparison part 124 compares the sections SC having the corresponding order (description position PS) in the program PG before update and the program PG after update has been described above. However, as illustrated in FIG. 11, the comparison part 124 may compare, for example, sections SC having the same name (identification information) in the program PG before update and the program PG after update.

### [Example of realization using software]

The functional blocks of the development assistance device 10 may be realized by a logic circuit (hardware) formed in an integrated circuit (IC chip) or the like, or may be realized by software using a central processing unit (CPU). Specifically, the reception part 110, the execution part 120, the display control part 130, and the addition part 140 may be realized by hardware or may be realized by software.

In the latter case, the development assistance device 10 includes a CPU that executes instructions of a program which is software for realizing each function, a read only memory (ROM) or a storage device (these are referred to as a "recording medium") in which the program and various types of data are stored so that the program and data can be read by the computer (or the CPU), a random access memory (RAM) in which the above program is developed, and the like. The objective of the present invention is achieved by a computer (or the CPU) reading and executing the program from the recording medium. As the recording medium, a "non-transitory tangible medium" such as a tape, a disk, a card, a semiconductor memory, or a programmable logic circuit can be used. Further, the program may be supplied to the computer via any transmission medium (a communication network, broadcast wave, or the like) capable of transmitting the program. The present invention can also be realized in the form of a data signal embedded in carrier waves in which the program is embodied by electronic transmission.

### [Conclusion]

As described above, the development assistance device according to the aspect of the present invention is a development assistance device for assisting a user in creating a program to be executed by a control device. The program is divided into a plurality of sections that are units of processing set by the user regardless of a calling relationship, and the plurality of sections is respectively and sequentially executed from a top description position to a bottom description position according to description positions in the program, and the development assistance device includes a reception part configured to receive a user operation for setting a hierarchical relationship among the plurality of sections; and a hierarchy management part configured to assign information for specifying a hierarchy to which each of the plurality of sections belongs, to each of the plurality of sections, according to the hierarchical relationship.

According to the above configuration, when the development assistance device receives a user operation for setting a hierarchical relationship among the plurality of sections, the development assistance device assigns information for specifying the hierarchy to which each of the plurality of sections belongs, to each of the plurality of sections, according to the hierarchical relationship.

The "calling relationship" refers to a "calling-called relationship" between "a plurality of units (elements) constituting the program" such as program organization unit (POU) defined in IEC 61131-3. The "calling relationship" may also be referred to as a "referring-referenced relationship" or a "logical relationship".

For example, when a certain POU calls (refers to) another POU in the program, the certain POU may be referred to as a calling source (a referring source), and the other POU called by the certain POU may be referred to as a calling destination (referring destination). It is said that there is a calling relationship with the certain POU as the calling source and the other POU as the calling destination between the certain POU and the other POU.

In the related art, it is not possible to set the hierarchical relationship among the plurality of sections constituting the program, and thus, it is not possible for the user to manage the plurality of sections in a format that reflects information having a mutual inclusion relationship such as a "process and function of a device".

On the other hand, the development assistance device enables the user to set an "any hierarchical relationship" among the plurality of sections constituting the program, regardless of the calling relationship (logical relationship). That is, the user can set the hierarchical relationship among the plurality of sections constituting the program in which the information having a mutual inclusion relationship such as a "process and function of a device" has been reflected.

Therefore, the development assistance device has an effect that the user is enabled to "manage the plurality of sections constituting the program in a format that reflects information having a mutual inclusion relationship such as a "process and function of a device" regardless of a logical relationship".

Further, since the execution order of the sections is determined according to a simple rule of "sequential execution from the top description position to the bottom description position", the user can easily understand the execution order of each of the plurality of sections. It is possible to evaluate the fact that "the user can easily understand the execution order of each of the plurality of sections" as the convenience of the sections.

The "information for specifying the hierarchy" assigned to each of the plurality of sections constituting the program does not have influence on the execution order of each of the plurality of sections, that is, the hierarchy to which the section belongs does not have influence on the execution order of the section. Therefore, even when the hierarchical relationship is set among the plurality of sections by the user, there is no influence on the simple rule for the section of "sequential execution from the top description position to the bottom description position", that is, there is no influence on the convenience of the section.

Therefore, the development assistance device has an effect that "the user is enabled to manage the plurality of sections in a format that reflects information having a mutual inclusion relationship such as a "process and function of a device"" while maintaining the convenience of the section.

Furthermore, the user can set the hierarchical relationship among the plurality of sections in which the information having a mutual inclusion relationship such as a "process and function of a device" has been reflected. That is, the user can associate two or more sections with each other according to the "relationship that is meaningful to the user."

The development assistance device executes, for example, at least one of change, duplication, comparison, and the like of the description position in the program in units of two or more sections associated with each other according to a "relationship meaningful to the user".

Therefore, the development assistance device has an effect that it is possible to execute, for example, change, duplication, comparison, and the like of the description position in the program in units of two or more sections associated with each other according to the "relationship meaningful to the user".

In the development assistance device according to the aspect of the present invention, when a certain section and another section different from the certain section satisfy a condition that (1) a hierarchy to which the certain section belongs is one level higher than a hierarchy to which the another section belongs, (2) in the program, a description position of the certain section is higher than a description position of the other section, and (3) in the program, sections other than the certain section belonging to the same hierarchy as the hierarchy to which the certain section belongs are not described between a description position of the certain section and the description position of the another section, a parent-child relationship with the certain section being set as a parent node and the another section being set as a child node may be set between the certain section and the another section.

According to the above configuration, the development assistance device sets the parent-child relationship between the certain section and the other section when the certain section and the other section satisfy the condition.

Here, the condition is a condition related to the hierarchy to which the section belongs and the description position of the section in the program. Therefore, the development assistance device can set the parent-child relationship between the certain section and the other section according to the hierarchical relationship set among the plurality of sections by the user and the description position of the section in the program.

The hierarchical relationship is a relationship set arbitrarily by the user, and is, for example, a relationship that reflects information having a mutual inclusion relationship such as a "process and function of a device".

Therefore, the development assistance device has an effect that it is possible to set the parent-child relationship between the certain section and the other section in a format that reflects the information having a mutual inclusion relationship such as a "process and function of a device."

The development assistance device according to the aspect of the present invention may further include a display control part configured to display identification information of each of the certain section and the other section having the parent-child relationship using a tree structure indicating the parent-child relationship. When the display control part displays the identification information of the certain section, the display control part may be able to switch between (1) a folded display in which the identification information of the other section is not displayed and (2)an unfolded display in which the identification information of the other section is displayed together with the identification information of the certain section.

According to the above configuration, when the development assistance device displays the identification information of the certain section, the development assistance device can switch between the folded display in which the identification information of the section corresponding to the child node is not displayed and the unfolded display in which the identification information of the section corresponding to the child node is displayed.

Here, since the identification information of the section corresponding to the child node is not displayed in the folded display, the folded display is suitable as, for example, a display format when the user wants to confirm only the sections belonging to the higher hierarchy.

On the other hand, since the identification information of the section corresponding to the child node is displayed in the unfolded display, the unfolded display is suitable as, for example, a display format when the user wants to confirm a section set as a child node for the certain section.

Therefore, the development assistance device has an effect that it is possible to display each of the plurality of sections in a display format according to a level desired by the user.

In the development assistance device according to the aspect of the present invention, when certain description content in the program is grammatically incorrect, the display control part may display (1) identification information of a section including the certain description content, and (2) identification information of a section corresponding to an ancestor node in the tree structure indicating the parent-child relationship, the tree structure being a tree structure with the section including the certain description content as a descendant node, as identification information of the section containing the error.

According to the above configuration, when certain description content in the program is grammatically incorrect, the development assistance device displays the identification information of the section containing the certain description content, and the identification information of the section corresponding to the ancestor node of "the section containing the certain description content".

Therefore, the development assistance device has an effect that it is possible to cause the user to easily confirm not only the section containing the grammatically incorrect description content, but also the section corresponding to the ancestor node of the "section containing the grammatically incorrect description content".

In the development assistance device according to the aspect of the present invention, the user can execute at least one of changing the execution order, cutting, copying, pasting, importing, exporting, and changing the hierarchy in units of section groups each consisting of (1) one section and (2) all sections corresponding to descendant nodes when the one section is an ancestor node in a tree structure indicating the parent-child relationship.

According to the above configuration, the development assistance device enables "the user to execute at least one of changing an execution order, cutting, copying, pasting, importing, exporting, and changing a hierarchy with a section group as a unit".

Here, the section group consists of (1) a section corresponding to an ancestor node in the tree structure indicating the parent-child relationship, and (2) all sections corresponding to descendant nodes for the ancestor node in the tree structure. The parent-child relationship is set according to the hierarchical relationship "arbitrarily set among the plurality of sections by the user" by the development assistance device. Therefore, the section group is a unit arbitrarily set for the plurality of sections constituting the program by the user, and can be regarded as a unit consisting of two or more sections.

Therefore, the development assistance device has an effect that it is possible to execute at least one of changing the execution order, cutting, copying, pasting, importing, exporting, and changing the hierarchy in "units set arbitrarily for the plurality of sections by the user.".

The development assistance device according to the aspect of the present invention may further include a selection part configured to select, as a target, a section group consisting of (1) the certain section and (2) all sections corresponding to descendant nodes in a tree structure indicating the parent-child relationship, the tree structure being a tree structure with the certain section as an ancestor node, when a user operation for selecting the certain section is received.

According to the above configuration, the development assistance device selects, as a target, the section group consisting the certain section and all the sections corresponding to the descendant nodes when the user operation for selecting the certain section is received.

Here, the section group consists of (1) a section corresponding to an ancestor node in the tree structure indicating the parent-child relationship, and (2) all sections corresponding to descendant nodes for the ancestor node in the tree structure. The parent-child relationship is set according to the hierarchical relationship "arbitrarily set among the plurality of sections by the user" by the development assistance device. Therefore, the section group is a unit arbitrarily set for the plurality of sections constituting the program by the user, and can be regarded as a unit consisting of two or more sections. The user operation for selecting the certain section can be regarded as a user operation for selecting, as a target of processing, the section group "consisting of the certain section and all the sections corresponding to descendant nodes in a tree structure with the certain section as an ancestor node."

Therefore, the development assistance device has an effect that it is possible to select two or more sections (that is, the section group) including the certain section according to the "unit set arbitrarily for the plurality of sections by the user" when the user selects the certain section. That is, the development assistance device has an effect that it is possible to select the section group including the certain section and the other section associated with the certain section by the user, as a target selected by the user when the user selects the certain section.

The development assistance device according to the aspect of the present invention may further include an order management part configured to manage an execution order of each of the plurality of sections. The order management part may set the execution order of the section with the higher description position as an execution order earlier than the execution order of the section with a lower description position, according to the description positions of the sections in the program regardless of the hierarchical relationship of the sections.

According to the above configuration, the development assistance device determines the execution order of the sections according to the simple rule of "sequential execution from the top description position to the bottom description position" regardless of the hierarchical relationship of the sections.

Further, since the execution order of the sections is determined according to a simple rule of "sequential execution from the top description position to the bottom description position", the user can easily understand the execution order of each of the plurality of sections. It is possible to evaluate the fact that "the user can easily understand the execution order of each of the plurality of sections" as the convenience of the sections.

Therefore, the development assistance device has an effect that "the user is enabled to manage the plurality of sections in a format that reflects information having a mutual inclusion relationship such as a "process and function of a device"" while maintaining the convenience of the section.

In the development assistance device according to the aspect of the present invention, when there is a user operation for disposing a section group consisting of (1) a certain section and (2) all sections corresponding to descendant nodes in a tree structure indicating the parent-child relationship, the tree structure being a tree structure with the certain section as an ancestor node, at a position in the program immediately before another section belonging to the hierarchy same as the hierarchy to which the certain section belongs, the order management part may (3) not change a relative execution order of each section in the section group for two or more of the sections included in the section group, and (4) set the execution order of the section at a lowest description position among the sections included in the section group as an execution order immediately before the execution order of the another section.

According to the above configuration, the development assistance device executes the following processing when there is a user operation for disposing the section group including the certain section at a position in the program immediately before another section belonging to the same hierarchy as that to which the certain section belongs. That is, the development assistance device sets the execution order of the section with the lowest description position among the sections included in the section group to the execution order immediately before the execution order of the other section. The development assistance device does not change the relative execution order of the two or more sections included in the section group, that is, does not change the relative order relationship of the respective sections in the section group.

Therefore, the development assistance device has an effect that it is possible to collectively change the execution orders of the two or more sections included in the section group to before the execution order of the other section according to the "unit set arbitrarily for the plurality of sections by the user".

In the development assistance device according to the aspect of the present invention, when there is a user operation for disposing a section group consisting of (1) a certain section and (2) all sections corresponding to descendant nodes in a tree structure indicating the parent-child relationship, the tree structure being a tree structure with the certain section as an ancestor node, at a position in the program immediately after another section belonging to the hierarchy same as the hierarchy to which the certain section belongs, the order management part may (3) not change the relative execution order of each section in the section group for two or more of the sections included in the section group, and (4) set the execution order of the certain section as an execution order one position after the execution order of the section with a lowest description position among the sections corresponding to descendant nodes in the tree structure indicating the parent-child relationship, the tree structure being a tree structure with the another section as an ancestor node.

According to the above configuration, when there is a user operation for disposing the section group including the certain section at a position immediately after the other section belonging to the same hierarchy as that to which the certain section belongs, the development assistance device executes the following processing. That is, the development assistance device sets the execution order of the certain section to an execution order one position after the execution order of the section with the lowest description position among the sections corresponding to the descendant nodes in the tree structure with the other section as an ancestor node.
The development assistance device does not change the relative execution order of the two or more sections included in the section group, that is, does not change the relative order relationship of the respective sections in the section group.

Therefore, the development assistance device has an effect that it is possible to collectively change the execution orders of the two or more sections included in the section group to after the execution order of the other section according to the "unit set arbitrarily for the plurality of sections by the user".

The development assistance device according to an aspect of the present invention may further include an addition part configured to, when there is a user operation of importing the section group consisting of (1) a certain section in which a certain hierarchy in the parent-child relationship is set as a hierarchy to which the section is to belong and (2) the sections corresponding to descendant nodes in the tree structure with the certain section as an ancestor node, store each of the two or more sections constituting the section group in a storage part without changing the hierarchy to which each section belongs. The order management part may (3) not change the relative execution order of each section in the section group for two or more of the sections included in the section group, and (4) set the execution order of the certain section to an execution order one position after the execution order of the section to be executed latest at a time point before the section group is imported.

According to the above configuration, the development assistance device stores the section group in the storage part when there is a user operation of importing the section group consisting of the certain section and the sections corresponding to descendant nodes in the tree structure with the certain section as an ancestor node. In particular, the development assistance device stores the section group in the storage part while maintaining an ancestor-descendant relationship between the two or more sections SC constituting the section group, that is, stores each of the two or more sections SC constituting the section group in the storage part.

Specifically, the development assistance device stores each of the two or more sections constituting the section group in the storage part without changing the hierarchy to which each section belongs. The development assistance device sets the execution order of the certain section to an execution order one position after the execution order of the section to be executed latest at a time point before the section group is imported without changing the relative execution order of the two or more sections.

Therefore, the development assistance device has an effect that it is possible to import, at a time, two or more sections to which the parent-child relationship (ancestor-descendant relationship) has been assigned by the user, instead of importing two or more sections one by one.

In particular, the development assistance device has an effect that it is possible to import, at a time, the two or more sections SC to which the parent-child relationship (ancestor-descendant relationship) has been assigned by the user while maintaining the ancestor-descendant relationship between the sections.

The development assistance device according to the aspect of the present invention may include a comparison part configured to compare whether a hierarchy before update and a hierarchy after update of a certain section match when comparing the program before update and after update.

According to the above configuration, the development assistance device performs comparison to determine whether the hierarchy before update and the hierarchy after update of the certain section match when comparing the program before and after the update.

Therefore, the development assistance device has an effect that "the user is enabled to confirm the section of which only the hierarchy to which the section belongs has been changed before and after update".

In the development assistance device according to the aspect of the present invention, when a user operation for raising or lowering, by one level, the hierarchy to which a certain section belongs is received, the hierarchy management part may collectively raise or lower, by one level, (1) the hierarchy to which the certain section belongs and (2) the hierarchy to which each of all sections corresponding to descendant nodes in a tree structure indicating the parent-child relationship, the tree structure being a tree structure with the certain section as an ancestor node, belongs according to the user operation.

According to the above configuration, the development assistance device changes hierarchies to which the following sections belong, in addition to the hierarchy to which the certain section belongs, when a user operation for raising or lowering, by one level, the hierarchy to which the certain section corresponding to the ancestor node belongs is received. That is, the development assistance device changes the hierarchy to which each of all the sections corresponding to the descendant nodes in the tree structure with the certain section as an ancestor node belongs, in addition to the hierarchy to which the certain section belongs.

Therefore, the development assistance device has an effect that it is possible to collectively raise or lower, by one level, the hierarchy to which each of the two or more sections having the ancestor-descendant relationship belongs according to the user operation.

In order to solve the above problem, a control method according to an aspect of the present invention is a control method for a development assistance device for assisting a user in creating a program to be executed by a control device. The program is divided into a plurality of sections that are units of processing set by the user regardless of a calling relationship, the plurality of sections is respectively and sequentially executed from a top description position to a bottom description position according to description positions in the program, and the control method includes: a reception step of receiving a user operation for setting a hierarchical relationship among the plurality of sections; and a hierarchy management step of assigning information for specifying the hierarchy to which each of the plurality of sections belongs, to each of the plurality of sections, according to the hierarchical relationship.

According to the above configuration, when a user operation for setting a hierarchical relationship among the plurality of sections is received, the control method includes assigning information for specifying the hierarchy to which each of the plurality of sections belongs, to each of the plurality of sections, according to the hierarchical relationship.

The "calling relationship" refers to a "calling-called relationship" between "a plurality of units (elements) constituting the program" such as program organization unit (POU) defined in IEC 61131-3. The "calling relationship" may also be referred to as a "referring-referenced relationship" or a "logical relationship".

For example, when a certain POU calls (refers to) another POU in the program, the certain POU may be referred to as a calling source (a referring source), and the other POU called by the certain POU may be referred to as a calling destination (referring destination). It is said that there is a calling relationship with the certain POU as the calling source and the other POU as the calling destination between the certain POU and the other POU.

In the related art, it is not possible to set the hierarchical relationship among the plurality of sections constituting the program, and thus, it is not possible for the user to manage the plurality of sections in a format that reflects information having a mutual inclusion relationship such as a "process and function of a device".

On the other hand, the control method enables the user to set an "any hierarchical relationship" among the plurality of sections constituting the program, regardless of the calling relationship (logical relationship). That is, the user can set the hierarchical relationship among the plurality of sections constituting the program in which the information having a mutual inclusion relationship such as a "process and function of a device" has been reflected.

Therefore, the control method has an effect that the user is enabled to "manage the plurality of sections constituting the program in a format that reflects information having a mutual inclusion relationship such as a "process and function of a device" regardless of a logical relationship".

Further, since the execution order of the sections is determined according to a simple rule of "sequential execution from the top description position to the bottom description position", the user can easily understand the execution order of each of the plurality of sections. It is possible to evaluate the fact that "the user can easily understand the execution order of each of the plurality of sections" as the convenience of the sections.

The "information for specifying the hierarchy" assigned to each of the plurality of sections constituting the program does not have influence on the execution order of each of the plurality of sections, that is, the hierarchy to which the section belongs does not have influence on the execution order of the section. Therefore, even when the hierarchical relationship is set among the plurality of sections by the user, there is no influence on the simple rule for the section of "sequential execution from the top description position to the bottom description position", that is, there is no influence on the convenience of the section.

Therefore, the control method has an effect that "the user is enabled to manage the plurality of sections in a format that reflects information having a mutual inclusion relationship such as a "process and function of a device"" while maintaining the convenience of the section.

Further, the user can set the hierarchical relationship among the plurality of sections in which the information having a mutual inclusion relationship such as a "process and function of a device" has been reflected. That is, the user can associate two or more sections with each other according to the "relationship that is meaningful to the user."

The control method includes executing, for example, at least one of change, duplication, comparison, and the like of the description position in the program in units of two or more sections associated with each other according to a "relationship meaningful to the user".

Therefore, the development assistance device has an effect that it is possible to execute, for example, change, duplication, comparison, and the like of the description position in the program in units of two or more sections associated with each other according to the "relationship meaningful to the user".

The present invention is not limited to each embodiment described above, but can be modified in various ways within the scope shown in the claims, and embodiments obtained by appropriately combining technical means disclosed in the different embodiments are also included in the technical scope of the present invention.

### [Reference Signs List]

10 Development assistance device
20 PLC (control device)
110 Reception part
121 Hierarchy management part
122 Selection part
123 Order management part
124 Comparison part
130 Display control part
140 Addition part
HN Hierarchy number (information for specifying hierarchy)
PG Program
PS Description position
SC Section
SG Section group
S 110 Reception step
S 120 Hierarchy management step

## Claims

1. A development assistance device for assisting a user in creating a program to be executed by a control device,
wherein the program is divided into a plurality of sections that are units of processing set by the user regardless of a calling relationship,
the plurality of sections is respectively and sequentially executed from a top description position to a bottom description position according to description positions in the program, and
the development assistance device comprises:
a reception part configured to receive a user operation for setting a hierarchical relationship among the plurality of sections; and
a hierarchy management part configured to assign information for specifying a hierarchy to which each of the plurality of sections belongs, to each of the plurality of sections, according to the hierarchical relationship.

2. The development assistance device according to claim 1,
wherein, with a certain section and another section different from the certain section satisfying a condition that (1) a hierarchy to which the certain section belongs is one level higher than a hierarchy to which the another section belongs, (2) in the program, a description position of the certain section is higher than a description position of the another section, and (3) in the program, sections other than the certain section belonging to a hierarchy same as the hierarchy to which the certain section belongs are not described between the description position of the certain section and the description position of the another section, a parent-child relationship with the certain section being set as a parent node and the another section being set as a child node is set between the certain section and the another section.

3. The development assistance device according to claim 2, further comprising:
a display control part configured to display identification information of each of the certain section and the another section having the parent-child relationship by using a tree structure indicating the parent-child relationship,
wherein, in a case where the display control part displays the identification information of the certain section, the display control part is able to switch between
(1) a folded display in which the identification information of the another section is not displayed and
(2) an unfolded display in which the identification information of the another section is displayed together with the identification information of the certain section.

4. The development assistance device according to claim 3, wherein, in a case where certain description content in the program is grammatically incorrect,
the display control part displays
(1) identification information of a section including the certain description content, and
(2) identification information of a section corresponding to an ancestor node in a tree structure indicating the parent-child relationship, the tree structure being a tree structure with the section including the certain description content as a descendant node, as identification information of the section containing the error.

5. The development assistance device according to any one of claims 2 to 4, wherein the user is able to execute at least one of changing an execution order, cutting, copying, pasting, importing, exporting, and changing a hierarchy with a section group, as a unit, consisting of
(1) one section and
(2) all sections corresponding to descendant nodes in a case where the one section is an ancestor node in a tree structure indicating the parent-child relationship.

6. The development assistance device according to any one of claims 2 to 5, further comprising:
a selection part configured to select, as a target, a section group consisting of
(1) the certain section, and
(2) all sections corresponding to descendant nodes in a tree structure indicating the parent-child relationship, the tree structure being a tree structure with the certain section as an ancestor node, in a case where a user operation for selecting the certain section is received.

7. The development assistance device according to any one of claims 2 to 6, further comprising:
an order management part configured to manage an execution order of each of the plurality of sections,
wherein the order management part sets the execution order of the section with a higher description position as an execution order earlier than the execution order of the section with a lower description position, according to the description positions of the sections in the program, regardless of the hierarchical relationship of the sections.

8. The development assistance device according to claim 7,
wherein, in a case where there is a user operation for disposing a section group consisting of (1) a certain section and (2) all sections corresponding to descendant nodes in a tree structure indicating the parent-child relationship, the tree structure being a tree structure with the certain section as an ancestor node, at a position in the program immediately before another section belonging to a hierarchy same as a hierarchy to which the certain section belongs,
the order management part
(3) does not change a relative execution order of each section in the section group for two or more of the sections included in the section group, and
(4) sets an execution order of a section at a lowest description position among the sections included in the section group as an execution order immediately before the execution order of the another section.

9. The development assistance device according to claim 7 or 8,
wherein, in a case where there is a user operation for disposing a section group consisting of (1) a certain section and (2) all sections corresponding to descendant nodes in a tree structure indicating the parent-child relationship, the tree structure being a tree structure with the certain section as an ancestor node, at a position in the program immediately after another section belonging to a hierarchy same as a hierarchy to which the certain section belongs,
the order management part
(3) does not change a relative execution order of each section in the section group for two or more of the sections included in the section group, and
(4) sets an execution order of the certain section as an execution order one position after an execution order of a section with a lowest description position among the sections corresponding to descendant nodes in the tree structure indicating the parent-child relationship, the tree structure being a tree structure with the another section as an ancestor node.

10. The development assistance device according to any one of claims 7 to 9, further comprising:
an addition part configured to, in a case where there is a user operation of importing a section group consisting of (1) a certain section in which a certain hierarchy in the parent-child relationship is set as a hierarchy to which the section is to belong and (2) sections corresponding to descendant nodes in a tree structure with the certain section as an ancestor node, store each of two or more sections constituting the section group in a storage part without changing a hierarchy to which each of the two or more sections belongs,
wherein the order management part
(3) does not change a relative execution order of each section in the section group for two or more of the sections included in the section group, and
(4) sets an execution order of the certain section to an execution order one position after an execution order of the section to be executed latest at a time point before the section group is imported.

11. The development assistance device according to any one of claims 1 to 10, further comprising:
a comparison part configured to compare whether a hierarchy before update and a hierarchy after update of a certain section match when comparing the program before update and after update.

12. The development assistance device according to any one of claims 2 to 10,
wherein, in a case where a user operation for raising or lowering, by one level, a hierarchy to which a certain section belongs is received, the hierarchy management part
collectively raises or lowers, by one level,
(1) the hierarchy to which the certain section belongs and
(2) a hierarchy to which each of all sections corresponding to descendant nodes in a tree structure indicating the parent-child relationship, the tree structure being a tree structure with the certain section as an ancestor node, belong according to the user operation.

13. A control method for a development assistance device for assisting a user in creating a program to be executed by a control device,
wherein the program is divided into a plurality of sections that are units of processing set by the user regardless of a calling relationship,
the plurality of sections is respectively and sequentially executed from a top description position to a bottom description position according to description positions in the program, and
the control method comprises:
a reception step of receiving a user operation for setting a hierarchical relationship among the plurality of sections; and
a hierarchy management step of assigning information for specifying a hierarchy to which each of the plurality of sections belongs, to each of the plurality of sections, according to the hierarchical relationship.

14. An information processing program for causing a computer to function as the development assistance device according to claim 1, the information processing program causing the computer to function as the reception part and the hierarchy management part.

15. A computer-readable recording medium having the information processing program according to claim 14 recorded thereon.
